# EUROPEAN PATENT SPECIFICATION

(11) **EP 0 669 770 B1**
(45) Date of publication and mention of the grant of the patent: **30.08.2000**
(21) Application number: 95107040.8
(22) Date of filing: 07.10.1988
(51) Int. Cl.: H04N 9/83, H04N 9/79

(54) **VTR having a chrominance sub-carrier phase shifting circuit**
Videobandrecorder mit einer Schaltungsanordnung für die Phasenverschiebung des Farbträgers
Enregistreur à bande vidéo avec un circuit pour le décalage de la phase de la sous-porteuse couleur

(30) Priority: 08.10.1987 JP 25422987; 09.10.1987 JP 25594487
(43) Date of publication of application: 30.08.1995
(62) Divisional of application: 88116685.4
(73) Proprietor: VICTOR COMPANY OF JAPAN, LIMITED, Kanagawa-ku Yokohama (JP)
(72) Inventor: Kido, Kouichi, Zushi-shi, Kanagawa-ken (JP); Shibayama, Kenji, Tokyo (JP); Tsuruta, Masahiko, Yokohama (JP); Kosaka, Yoshiteru, Zushi-shi, Kanagawa-ken (JP)
(74) Representative: Manitz, Finsterwald & Partner

(56) References cited:
- EP-A- 0 024 744
- EP-A- 0 078 542
- EP-A- 0 228 240
- EP-A- 0 289 326
- GB-A- 2 090 101
- US-A- 4 178 606
- US-A- 4 405 937
- US-A- 4 524 380
- US-A- 4 647 983
- US-A- 4 686 585
- PATENT ABSTRACTS OF JAPAN vol. 10, no. 35 (E-380) <2092> 12 February 1986 & JP-A-60 192 491 (MITSUBISHI DENKI K.K.) 30 September 1985
- PATENT ABSTRACTS OF JAPAN vol. 8, no. 200 (E-266) (1637) 13 September 1984 & JP-A-59 089 096 (OLYMPUS KOGARU KOGYO K.K.) 23 May 1984
- PATENT ABSTRACTS OF JAPAN vol. 5, no. 149 (E-075) 19 September 1981 & JP-A-56 080 986 (SONY CORP.) 2 July 1981
- PATENT ABSTRACTS OF JAPAN vol. 3, no. 155 (E-160) 19 December 1979 & JP-A-54 134 925 (SONY CORP.) 19 October 1979
- TRANSACTIONS ON CONSUMER ELECTRONICS, vol.CE-29, no.3, August 1983, NEW YORK, US pages 172 - 178 TANABE ET AL. 'Triple color signal process IC for VCR'

## Description

### BACKGROUND OF THE INVENTION

The present invention relates to a video magnetic recording apparatus whereby an FM luminance signal and a frequency down-converted chrominance signal are frequency-multiplexed and recorded on a recording medium, and in particular to such an apparatus in which a pilot signal is inserted during recording, for use in controlling playback signal separation filter characteristics during playback. More particularly, the invention relates to a magnetic recording apparatus of the kind as defined in the preamble of claim 1.

Thus, the invention relates to a video tape recorder (hereinafter abbreviated to VTR) whereby bursts of a pilot signal are generated in the VTR with a specific phase relative to the phase of the chrominance burst signal of an input video signal and are inserted into respective horizontal and vertical blanking signals of the input video signal, to be recorded together with that video signal, for use during playback in controlling the characteristics of a filter used to separate the playback luminance signal from the overall playback signal. The filter characteristics are controlled in accordance with an anticipated level of luminance signal frequency components which will be present in the playback chrominance signal, as indicated by the phase of the playback pilot signal. That is, the phase of the playback pilot signal indicates whether the degree of exclusion of high frequency luminance signal components from the chrominance signal frequency band, prior to frequency down-conversion of the chrominance signal before recording, was above or below a certain value. However with a prior art type of VTR utilizing such a pilot signal control function, the pilot signal is generated by using a phase lock loop to obtain a CW (continuous wave) signal that is identical in frequency to the chrominance burst signal (i.e. chrominance sub-carrier frequency) of the input video signal to be recorded and is phase-locked to that chrominance burst signal. A 90° phase shift is applied to that CW signal to obtain a pilot signal, bursts of which are inserted in the chrominance signal. During playback, these pilot signal bursts are separated from the playback chrominance signal after frequency up-conversion of that chrominance signal, and are phase-compared with the frequency reference signal used in the aforementioned frequency up-conversion process, to detect the phase condition of the pilot signal. However it is necessary to apply a 90° phase shift to that frequency reference signal in order to execute this phase comparison. Thus, the prior art circuit has the disadvantage that it is necessary to use a 90° phase shift circuit during recording and playback. Such a circuit is difficult to manufacture economically such as to have a stable temperature characteristic, so that a temperature compensation circuit must be provided for each 90° phase shift circuit in order to ensure accurate phase detection of the playback pilot signal. The overall circuit scale and manufacturing cost of the VTR is thereby increased.

It is another disadvantage of a prior art VTR having a pilot signal control function as described above that it is difficult to apply a recently developed method of crosstalk suppression to such a VTR, i.e. a method whereby the phase of the chrominance sub-carrier is shifted by 90° in a fixed direction in each of successive horizontal scanning intervals during each of alternately occurring field intervals, prior to recording, these being respectively cancelled by equal and opposite phase shifts which are applied during playback. With a prior art VTR utilizing such a crosstalk suppression technique, the start of each such 90° phase shift operation will occur, within the chrominance signal prior to recording or the chrominance signal obtained by playback, at an instant which is substantially at the central region of each horizontal blanking interval (more precisely, midway between the end of the chrominance signal portion of one horizontal scanning interval and the start of the chrominance burst signal of the succeeding horizontal scanning interval). As a result, if pilot signal bursts are inserted into the horizontal blanking intervals of the chrominance signal, such successive 90° phase shifting will result in phase disturbances in the pilot signal, making satisfactory pilot signal control difficult to implement.

A magnetic recording apparatus of the kind as defined in the preamble of claim 1 is disclosed in GB-A-2 090 101. With this known apparatus, during the reproducing mode, a phase shift circuit reverses the direction of the phase shift from that upon recording, to restore the shifted phase of the carrier chrominance signal to the original phase. During the recording mode, a synchronizing signal is separated from the input composite video signal, and during the reproducing mode the synchronizing signal is derived from the demodulated luminance signal. The phase shift circuit uses the horizontal synchronizing signal as a switch signal.

### SUMMARY OF THE INVENTION

It is an objective of the present invention to overcome the problems of the prior art described above. Specifically, one objective of the present invention is to provide a magnetic recording apparatus whereby the phase of a pilot signal is set to a value differing by 90°or 270° from the average phase of the chrominance burst signal, prior to recording, and so differs in phase by 180° or 0° from that of a CW frequency reference signal used to regenerate the chrominance sub-carrier signal during playback operation. The aforementioned 90° phase shift circuits utilized in the prior art for the pilot signal during recording and during playback can thereby be eliminated.

Another objective of the present invention is to enable a phase shifting method of crosstalk suppression for a video recording apparatus (whereby successive 90° phase shifts of the chrominance subcarrier phase are executed in successive horizontal scanning intervals of a video signal prior to recording and after playback) to be applied to a video recording apparatus having a control function based on insertion of pilot signal bursts of specific phase into successive blanking intervals of the video signal prior to recording, but whereby the aforesaid 90° phase shifts do not adversely affect the pilot signal phase.

More specifically, the present invention provides a magnetic recording apparatus in accordance with claim 1.

### BRIEF DESCRIPTION OF THE DRAWINGS

Figs. 1(a) and 1(b) are block system diagrams of a recording system and playback system respectively of a prior art VTR;
Figs. 2(a) to 2(e) are diagrams of luminance signal and chrominance signal signal frequency bands for assistance in describing the background of the invention;
Figs. 3(a) to (d) are signal frequency band diagrams for illustrating a problem of high frequency luminance signal components present within a chrominance signal recorded by a VTR;
Figs. 4 and 5 are system block diagrams of a recording system and playback system respectively of a prior art VTR proposed by the assignees of the present invention, having a pilot signal control function;
Fig. 6 is a diagram showing relationships between pilot signal phase and chrominance burst signal phase in the VTR of Figs. 4 and 5;
Fig. 7 is shows frequency characteristics selectable for a luminance signal separation filter in the playback system of Fig. 5;
Fig. 8 is a block diagram of a prior art pilot signal generating circuit for a VTR playback system;
Fig. 9 is a block diagram of a prior art pilot signal judgement circuit for a VTR recording system;
Fig. 10 is a block diagram of an embodiment of a pilot signal generating circuit for a recording system of a VTR according to the present invention;
Fig. 11 (a) to (e) show signal waveforms in the circuit of Fig. 10;
Fig. 13 is a diagrams illustrating phase relationships between a pilot signal and chrominance burst signal for the embodiment of Fig. 10;
Figs. 14 and 16 are block diagrams of first and second embodiments respectively of a pilot signal judgement circuit for a playback system of a VTR according to the present invention;
Fig. 15(a) to (g) are diagrams illustrating signal waveforms for the embodiment of Fig. 14;
Figs. 17A and 17B are diagrams illustrating phase relationships between a pilot signal and chrominance burst signal for the embodiments of Fig. 14 and 16;
Fig 18 is a block diagram of a chrominance signal frequency conversion section of a recording system of a VTR employing a sequential 90° phase shift crosstalk suppression technique, previously proposed by the assignees of the present invention;
Fig. 19 is a block diagram of a chrominance signal frequency conversion section of a VTR playback system corresponding to Fig. 18;
Fig. 20 is a diagram of signal waveforms during horizontal blanking intervals, for the circuits of Figs. 18 or 19;
Figs. 21A and 21B are respective block diagrams of embodiments of a phase-shifting frequency conversion signal generating circuit for respective chrominance signal frequency conversion sections of a recording system and playback system of a VTR according to the present invention; and
Fig. 22 is a diagram of signal waveforms during horizontal blanking intervals, for the circuits of Fig. 21A or 21B.

### DESCRIPTION OF PREFERRED EMBODIMENTS

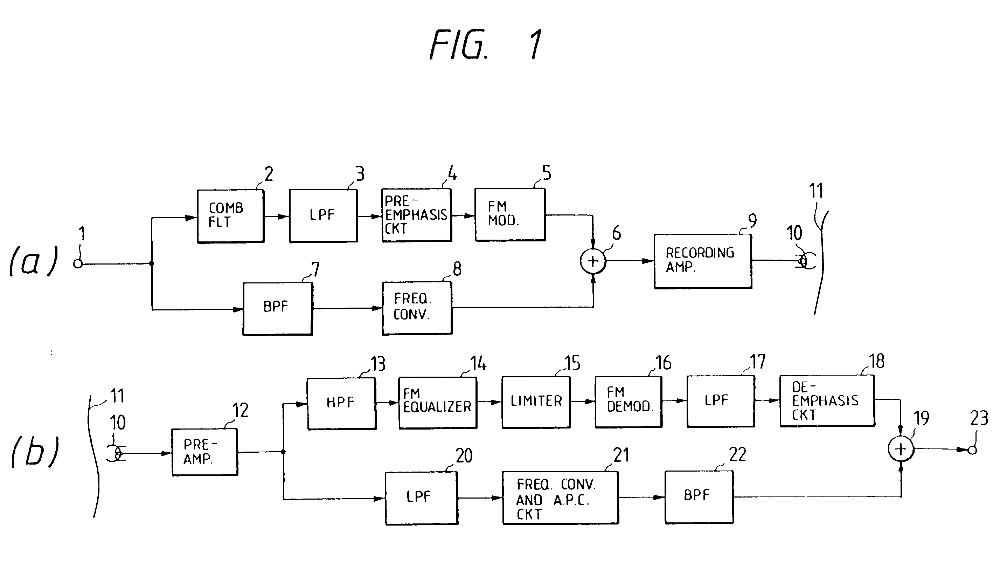

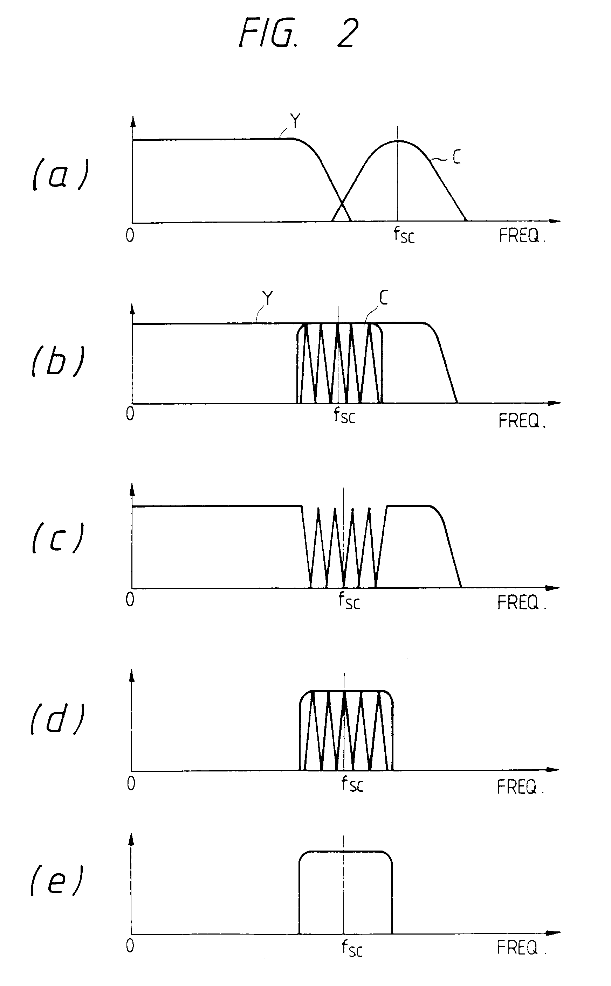

In a conventional prior art VTR which receives a color composite video signal as input, the luminance signal contained in the composite video signal is separated and is then frequency modulated to obtain an FM luminance signal, while the chrominance signal contained in the composite video signal is separated and is frequency down-converted to obtain a frequency down-converted chrominance signal that occupies a frequency band lying below the frequency band of the FM luminance signal. The FM luminance signal and the frequency down-converted chrominance signal are then frequency-multiplexed and the resultant frequency-multiplexed signal is recorded on a magnetic tape. Figs. 1(a) and 1(b) are simplified block system diagrams for illustrating the basic recording system and playback system of such a VTR. Fig. 2(a) shows the amplitude/frequency relationships between the luminance signal (designated as Y) and the chrominance signal (designated as C) derived from an input color composite video signal by the recording system of such a conventional VTR, prior to FM modulation of the luminance signal and frequency down-conversion of the chrominance signal for recording, with f_{SC} indicating the chrominance sub-carrier frequency. As shown, there is a slight degree of overlap between the high-frequency components of the luminance signal and the lower end of the chrominance signal frequency band. Thus, a small amount of high frequency components of the luminance signal will be present in the chrominance signal which is recorded and subsequently reproduced. However the amount of these high frequency luminance signal components contained in the chrominance signal will not be sufficient to cause problems as described hereinafter. The input composite video signal is transferred through a comb filter 2, which eliminates chrominance signal components, then through a LPF (low pass filter) 3 which cuts off unwanted high frequency components. The resultant luminance signal is amplified in a preamplifier circuit 4, whose output is supplied to a frequency modulator circuit 5 to be frequency modulated to obtain an FM luminance signal. This FM luminance signal is supplied to one input of a mixer 6.

The composite video signal from input terminal 1 is also supplied to a BPF (band pass filter) 7 for separating the chrominance signal from the composite video signal. The output chrominance signal from BPF 7 is supplied to a frequency converter circuit 8 which executes frequency down-conversion of the chrominance signal to obtain a frequency down-converted chrominance signal, which is supplied to the other input of the mixer 6. A frequency multiplexed signal is thereby obtained from the mixer 6, which is amplified in a recording amplifier 9, whose output signal is recorded on a magnetic tape 11 by a magnetic head 10.

As shown in Fig. 1(b), during playback operation, the signal thus recorded on the magnetic tape 11 is reproduced by the magnetic head 10, and the resultant playback signal is amplified in a preamplifier 12 whose output signal is supplied to a HPF (high pass filter) 13. The FM luminance signal contained in the playback signal is thereby separated from the playback signal, and is transferred through an FM equalizer circuit 14 to a limiter circuit 15, whose output signal is supplied to an FM demodulator circuit 16 to be demodulated, and the demodulated signal is transferred through a LPF 17 and a de-emphasis circuit 18 to thereby obtain the original luminance signal. This is supplied to one input of a signal adding circuit 19. The playback signal from the output of preamplifier 12 is also supplied to a LPF 20, which separates the frequency down-converted chrominance signal from the playback signal, to be supplied to a frequency converter and APC (automatic phase control) circuit 21, in which the frequency down-converted chrominance signal is shifted upward in frequency to the original frequency band, and the output signal from the frequency converter and APC circuit 21 is transferred through a BPF 22 to thereby obtain the original chrominance signal. This is supplied to the other input of the signal adder 19. The frequency converter and APC circuit 21 also functions to eliminate time-axis deviations (i.e. phase jitter) of the chrominance signal. An output signal containing the original luminance and chrominance signal components is thereby produced from the signal adder 19.

As shown in Fig. 2(a), the luminance signal frequency band in a conventional VTR, prior to FM modulation for recording, is limited to a relatively narrow range which is below the chrominance sub-carrier frequency f_{SC}, and the luminance signal band Y and chrominance signal band C do not significantly mutually overlap.

However in recent years, high picture quality VTRs have been developed for providing a higher picture definition than has been possible in the prior art, by extending the bandwidth of the luminance signal during recording and playback. Generally, operation of such a high picture quality VTR can be selected to be in a wide-band mode in which the frequency band of the luminance signal (prior to frequency modulation in recording and following frequency demodulation in playback) extends beyond the chrominance sub-carrier frequency of the chrominance signal, and a standard mode (referred to in the following as the "narrow-band mode") as described above for a conventional VTR, in which the chrominance signal and luminance signal frequency bands are respectively limited prior to recording such as to substantially completely eliminate high frequency components of the luminance signal from the chrominance signal frequency band. In order to eliminate luminance signal high frequency components from the chrominance signal prior to wide band mode recording in which the upper limit of the luminance frequencies extends beyond the chrominance sub-carrier frequency, it is possible to use an appropriate comb filter, i.e. to separate both the luminance and chrominance signals from an input composite video signal by respective comb filters. In this case, the frequency bands of the luminance signal and chrominance signal prior to frequency modulation and conversion before recording will be as illustrated in combination in Fig. 2(b), and as shown respectively in Figs. 2(c) and (d). However a comb filter for chrominance signal separation which will provide a sufficient degree of exclusion of luminance signal components from the chrominance signal band, to enable use of the full frequency range of the playback signals obtained in such wide band operation, is in practice highly expensive to manufacture. If a comb filter of insufficient performance is used in this application, then a significant level of luminance signal high-frequency components may remain in the chrominance signal bandwidth prior to recording, and color blurring will be produced in the resultant playback picture, as well as other problems resulting from beat interference between the demodulated playback luminance signal and the luminance signal components present in the playback chrominance signal. Since comb filters for such a luminance signal exclusion function are difficult to manufacture, it is usual in the prior art to utilize a band-pass filter for separating the chrominance signal from a composite video signal, for standard (i.e. narrow band) recording. If recording in such a wide-band mode is executed without first transferring the chrominance signal through a comb filter for exclusion of luminance signal components, then the chrominance signal prior to recording will be as shown in Fig. 2(e).

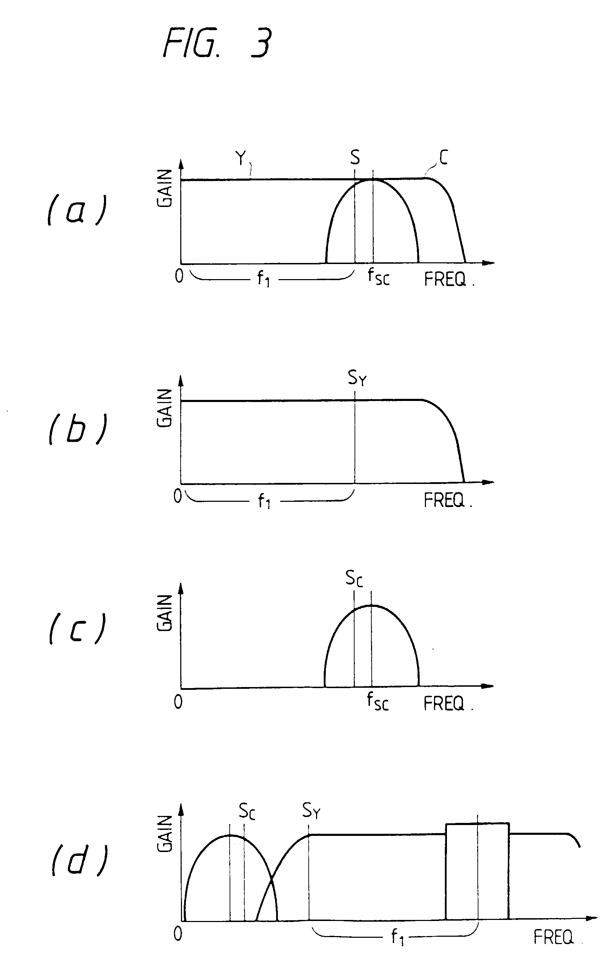

Figs. 3(a) and (b) basically correspond to Figs. 2(b) and (c) described above, with a luminance signal to be recorded having a frequency band which extends into the chrominance signal band, above the chrominance sub-carrier frequency f_{SC}. Fig. 3(c) shows the resultant components of the luminance signal which will be present in the chrominance signal, prior to recording, if a suitable comb filter is not used to exclude the luminance signal from the chrominance signal as described above. At an arbitrary frequency f₁, below the chrominance sub-carrier frequency f_{SC}, there will be a luminance signal component S_{Y} within the luminance signal, and a luminance signal component S_{C} within the chrominance signal frequency band, as illustrated in Figs. 3(b) and (c). Following frequency modulation of the luminance signal and frequency down-conversion of the chrominance signal prior to recording, these will become respectively shifted in frequency as illustrated in Fig. 3(d). It can be understood from Fig. 3(d) that overlap occurs between some high frequency luminance signal components that are not removed from the chrominance signal prior to frequency down-conversion and the FM luminance signal frequency band. These luminance signal components within the chrominance signal will therefore be transferred through the chrominance signal system during recording and playback and will subsequently result in beat interference in the final playback video signal, which causes problems such as decreased signal/noise ratio of the output composite video signal, display image inversion, etc.

In the case of a conventional VTR (i.e. which does not have the enhanced picture quality function described above, but operates only in a standard narrow band mode), the frequency band of the luminance signal is relatively narrow, and does not extend into the chrominance signal frequency band. Due to this separation of the luminance and chrominance signal frequency bands, the above problem does not arise. However if as in the example of Fig. 1(a), only the luminance signal is derived during recording by using a comb filter (followed by a LPF) and the chrominance signal is separated by using only a BPF, then if wide band operation is implemented with the luminance signal frequency band extending into the chrominance signal frequency band as shown in Fig. 3(a), the chrominance signal will be as shown in Fig. 2(e) and will contain high frequency luminance signal components. Thus, the interference problem described above will occur, unless the bandwidth of the separated playback luminance signal is suitably limited such as to exclude the high frequency luminance signal components that are contained in the playback luminance signal.

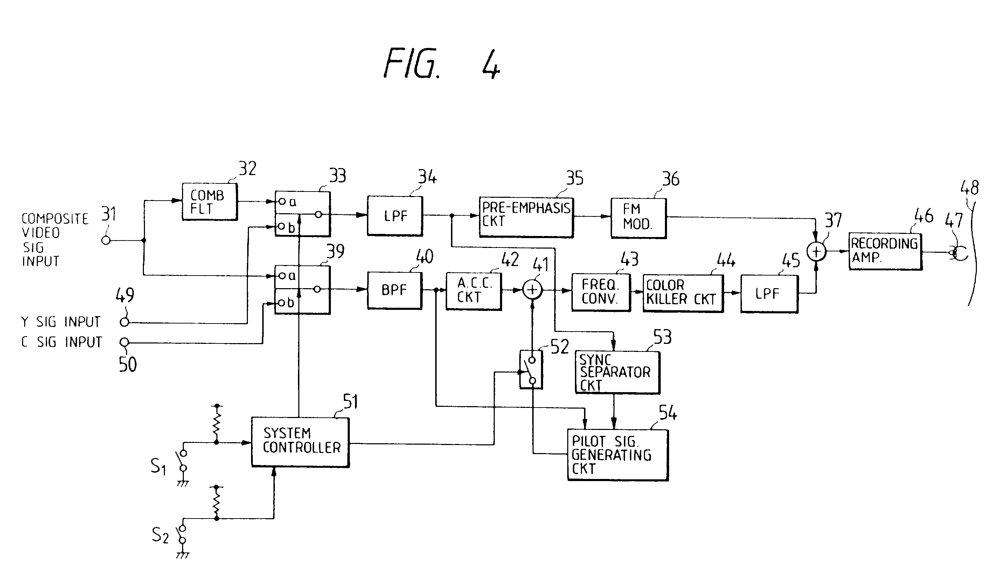

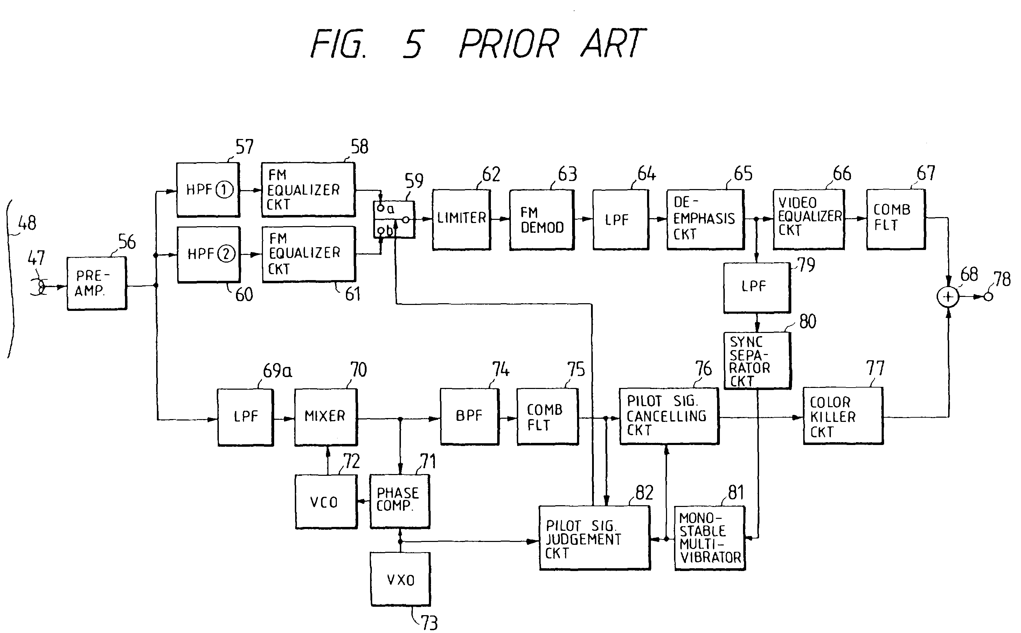

EP-A-0 289 326, claiming priori by from Japanese patent application 62-206 016 and constituting prior art under Article 54(3) EPC, discloses a VTR with a wide-band recording capability as described above and which also can accept, in addition to the usual color composite video signal, a color video signal consisting of mutually separate Y (luminance) and C (chrominance) signals to be recorded. Respective signal processing circuits are provided for the various types of input signals that may be applied to such a VTR. A magnetic recording and playback apparatus having recording and playback systems of the form disclosed in EP-A-0 289 326 are shown in the block diagrams of Figs. 4 and 5 respectively. The system can operate on PAL standard video signals. Such a VTR selectively provides three basic forms of operation, i.e. :
(a) one in which mutually separate luminance and chrominance signals are recorded;
(b) one in which a composite video signal is recorded in the wide band mode, with insufficient exclusion of luminance signal high frequency components from the playback chrominance signal, so that the bandwidth of the playback luminance signal must be appropriately limited, but improved picture quality by comparison with a conventional VTR is obtained, and
(c) one in which a composite video signal is recorded in the narrow band mode.

In Fig. 4, a color composite video signal is applied to input terminal 31, to be supplied to a comb filter 32 for separating the luminance signal Y from the composite video signal. This luminance signal is applied to one input terminal "a" of a switch circuit 33, having an output terminal which is coupled to the input of a LPF 34. The switch circuit 33 is operable for selecting either this luminance signal applied to input terminal "a" or a separate Y signal applied to another input terminal "b", as described hereinafter. The selected luminance signal from switch circuit 33 is transferred through LPF 34 and a pre-emphasis circuit 35 to be frequency modulated in a frequency modulator 36. The resultant FM luminance signal is supplied to one input of a mixer 37.

This system is operable in either a wide-band mode (to obtain high picture quality) or a narrow-band mode, e.g. under the control of a system controller and various components which are omitted from the drawings for simplicity of description. In the wide-band mode, the frequency band of the luminance signal (i.e. prior to frequency modulation for recording) extends beyond the chrominance sub-carrier frequency f_{SC}, for example it may extend to approximately 5 MHz. In the narrow-band mode, the frequency band of the luminance signal is limited to an upper limit which is lower than f_{SC}, for example is limited to approximately 3 MHz.

The composite video signal from input terminal 31 is also supplied to an input terminal "a" of a switch circuit 39. The output signal from the switch circuit 39 is transferred through a BPF 40 to thereby separate the chrominance signal from the composite video signal. This separated chrominance signal is then transferred through an ACC (automatic chroma control) circuit to one input of a signal adder 41. A pilot signal (described hereinafter) can be selectively applied to the other input of the signal adder 41. In this embodiment, the pilot signal is applied to the signal adder 41 during operation in the wide-band mode, i.e. in a condition in which the frequency band of the luminance signal extends above the chrominance sub-carrier frequency f_{SC}. The pilot signal consists of bursts of a signal having a frequency which is equal to the chrominance sub-carrier frequency f_{SC} (i.e. approximately 4.43 MHz in a PAL standard system). Successive ones of these pilot signal bursts are inserted into the chrominance signal at timings corresponding to successive horizontal and vertical blanking intervals.

The chrominance signal thus produced from the signal adder 41 is subjected to frequency down-conversion by a frequency converter 43 to obtain a frequency down-converted chrominance signal, which is transferred through a color-killer circuit 44 to a LPF 45, whose output signal is supplied to the other input of the mixer 37. The color-killer circuit 41 is operative when a black-and-white video signal is applied to the input terminal 31. The frequency-multiplexed signal that is thus obtained from the mixer 37 is then transferred through a recording amplifier 46 to a recording head 47 to be recorded on magnetic tape 48.

The luminance signal that is produced from the LPF 34, in addition to being supplied to the pre-emphasis circuit 35, is also supplied to a synchronizing signal separator circuit 53 for separating the horizontal synchronizing signal of the input video signal, which is supplied to an input of a pilot signal generating circuit 54. The pilot signal generating circuit 54 functions to generate the pilot signal, which is transferred through a switch circuit 52 to the signal adder 41 as described above.

A luminance signal Y and a chrominance signal C that are mutually separate (for example each of which has been previously transferred through an appropriate comb filter so that the respective frequency characteristics are as illustrated in Figs. 2(c) and 2(d)) are applied to input terminals 40 and 50 respectively of the playback system and hence to the other input terminals "b" of switch circuits 33 and 39 respectively. The switch circuits 33 and 39 execute simultaneous changeover switching to select either the "a" or the "b" input terminals of each, under the control of a signal applied from a system controller 51, which operates in response to control signals applied from externally operable switches S1 and S2. Changeover between selection of the "a" and "b" input terminals of the switch circuits 33 and 39 is controlled by actuations of switch S1. During recording of an input composite video signal applied to input terminal 31, in the wide-band mode described above, both of switch circuits 33 and 39 are set to the "a" terminal selection condition, while in addition a control signal produced from the system controller sets the switch circuit 52 in the closed state, so that the pilot signal from the pilot signal generating circuit 54 is applied to the signal adder 41. Selection of either the wide-band mode or the narrow-band mode is controlled by actuation of switch S2.

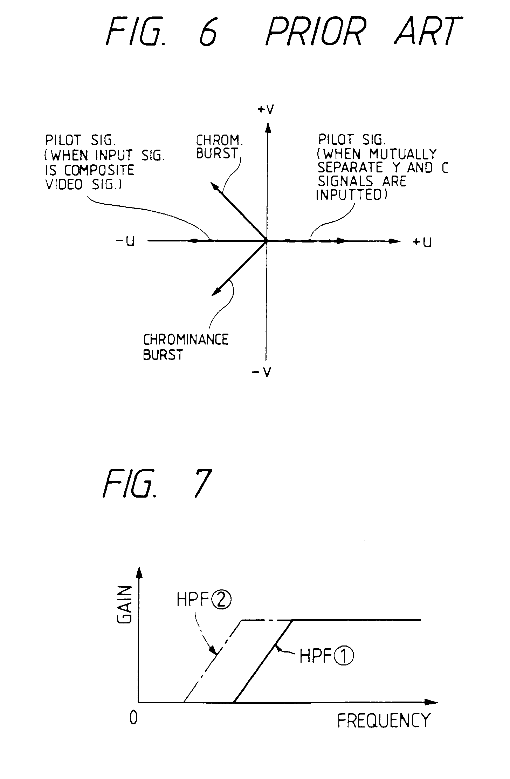

While the frequency of the pilot signal is identical to that of the chrominance sub-carrier signal, the phase of the pilot signal is related to that of the chrominance chrominance signal as illustrated in Fig. 6. Since a PAL standard video signal is assumed, the phase of the chrominance burst signal alternates between +45^{o} and -45° with respect to an average phase value that is indicated as axis -U in Fig. 6. The phase of the pilot signal is fixed as either corresponding to the -U axis of the +U axis (i.e. phase shifted by 180° relative to the -U axis). The +U and -U axes can thus be regarded as representing phase values of 0^{o} and 180° respectively. This phase of the pilot signal is established during recording operation, and is utilized to provide information regarding the recorded signal during playback. In this example, during recording operation in the wide-band mode, with separate luminance and chrominance signals being applied to the input terminals 49 and 50 so that both of switches 33 and 39 are set to their "b" selection positions and switch circuit 52 is closed to thereby insert the pilot signal into the chrominance signal, the phase of the pilot signal is set as +U (i.e. 0°) state. During recording operation in the wide-band mode with a composite video signal being applied to input terminal 31, both of switches 33 and 39 are set to their "a" selection positions and switch circuit 52 is closed, and the pilot signal phase is set to -U (i.e. 180°). During recording operation in the narrow-band mode, with the frequency band of the luminance signal set below the chrominance frequency band, switch circuit 52 is held open, so that the pilot signal is not recorded.

In the playback system of this VTR, shown in Fig. 5, a signal recorded on the magnetic tape 48 is reproduced by the magnetic head 47 and the resultant playback signal is transferred through a preamplifier 56 to respective inputs of two HPFs 57 and 60, for separating the luminance signal of the playback signal. The output signals from the HPFs 57, 60 are transferred through respective FM equalizer circuits 58 and 61, and hence to respective input terminals "a", "b" of a switch circuit 59. The HPF 57 has a higher cut-off frequency than the HPF 60, as illustrated in Fig. 7, and the characteristics of the FM equalizer circuits 58 and 61 are matched to those of the HPFs 57 and 60 respectively. Switching operation of the switch circuit 59 is controlled by a control signal supplied from a pilot signal judgement circuit 82, described hereinafter. When the signal being reproduced has been recorded from a composite video signal, in the wide-band mode described above, the control signal from the pilot signal judgement circuit 82 sets switch circuit 59 to select input terminal "a", while when mutually separate luminance and chrominance signals have been recorded in the wide-band mode, the control signal sets switch circuit to select input terminal "b". If a composite video signal was recorded in the narrow band mode, so that no pilot signal was recorded, then switch 59 is set to the "a" position.

The luminance signal selected by switch 59 is transferred through a limiter circuit 62 to be demodulated by an FM demodulator circuit 63, whose output signal is transferred through a LPF 64, a de-emphasis circuit 65, and a comb filter 67 to obtain the original luminance signal. This is applied to one input of a signal adder 68. The output signal from the preamplifier 56 is also transferred through a LPF 69a to obtain the frequency down-converted chrominance signal, which is then up-converted in a frequency converter circuit 70 to the frequency band of the original chrominance signal. Phase jitter of this chrominance signal are suppressed by an APC loop which includes a VCO (voltage controlled oscillator) 72, a phase comparator circuit 71, and a voltage-controlled quartz crystal oscillator 73. The chrominance signal is transferred through a BPF 74 and a comb filter 75 to a pilot signal cancelling circuit 76, in which any pilot signal present in the playback chrominance signal is eliminated. The resultant chrominance signal is transferred through a color-killer circuit 77 to the signal adder 68, to be combined with the luminance signal from comb filter 67. A playback composite video signal is thereby produced from the signal adder 68. The comb filter 75 serves to suppress crosstalk, and remove high frequency components of the luminance signal from the chrominance signal.

The luminance signal that is outputted from the de-emphasis circuit 65 is also transferred through a LPF 79 to a synchronizing signal separator circuit 80 to separate the horizontal synchronizing signal of the playback signal. The horizontal synchronizing signal triggers a monostable multivibrator circuit 81, which applies timing control pulses to the pilot signal cancelling circuit 76 and the pilot signal judgement circuit 82. The output pulses from the monostable multivibrator circuit 81 function as gate pulses which define the timings at which the pilot signal judgement circuit 82 judges whether or not a pilot signal is present within the playback chrominance signal. If a pilot signal is present, the pilot signal judgement circuit 82 judges whether the pilot signal phase corresponds to the the -U (i.e. 180°) or +U (i.e. 0°) axis as described above, and produces corresponding corresponding control signals for controlling the switch circuit 59. During playback of a signal which was recorded from an input composite video signal in the wide-band mode, indicated by the pilot signal phase being -U, switch circuit 59 is set to select the "a" input terminal thereof. During playback of a signal which was recorded from mutually separate luminance and chrominance signals that was recorded in the wide-band mode, indicated by the pilot signal phase being +U, switch circuit 59 is set to select the "b" input terminal thereof.

It should be noted that it would also be possible to control other parameters based on the phase of the pilot signal, in addition to the switch circuit 59.

In this way, if a signal being played back has been recorded in the wide-band mode with a composite video signal input (applied to input terminal 31), the HPF 57, having a higher cut-off frequency than HPF 57, will be selected for deriving the FM luminance signal from the playback signal. The cut-off frequency of the HPF 57 is determined such that the region of frequency overlap between the FM luminance signal and the luminance signal components contained in the playback chrominance signal, illustrated in Fig. 3(d), will be eliminated, so that beat interference resulting from such overlap is eliminated. On the other hand, if the signal being played back has been recorded in the wide-band mode with separate luminance and chrominance signals (e.g. which have been effectively mutually separated by respective comb filters as described hereinabove), then HPF 60 is selected for separating the FM luminance signal from the playback signal. Since HPF 60 has a lower cut-off frequency, optimum picture quality is obtained since the maximum range of playback luminance signal frequencies is utilized.

Thus with this system, an HPF is selected for deriving the FM luminance signal from the playback signal, based on the phase of the pilot signal. The problem presented by high frequency luminance signal components contained in the chrominance signal, when the chrominance signal and luminance signal are not mutually separated to a sufficient degree prior to recording in the wide band mode, is thereby eliminated. Noise and image inversion etc, resulting from beat frequency components produced by these high frequency luminance signal components, are thereby prevented. It can thus be understood that with this method, if the level of luminance signal components contained in the chrominance signal at the time of recording is above a predetermined level, a HPF having a relatively high cut-off frequency is selected for separating the playback luminance signal, while if the level of luminance signal components contained in the chrominance signal is below that predetermined level, then a HPF having a relatively low cut-off frequency is utilized to thereby obtain maximum bandwidth for the playback luminance signal, for optimum picture quality.

To achieve maximum elimination of the aforementioned frequency components which will produce beat interference, and to achieve maximum bandwidth for the playback luminance signal, each of the HPFs 57 and 60 should have an extremely sharp cut-off characteristic.

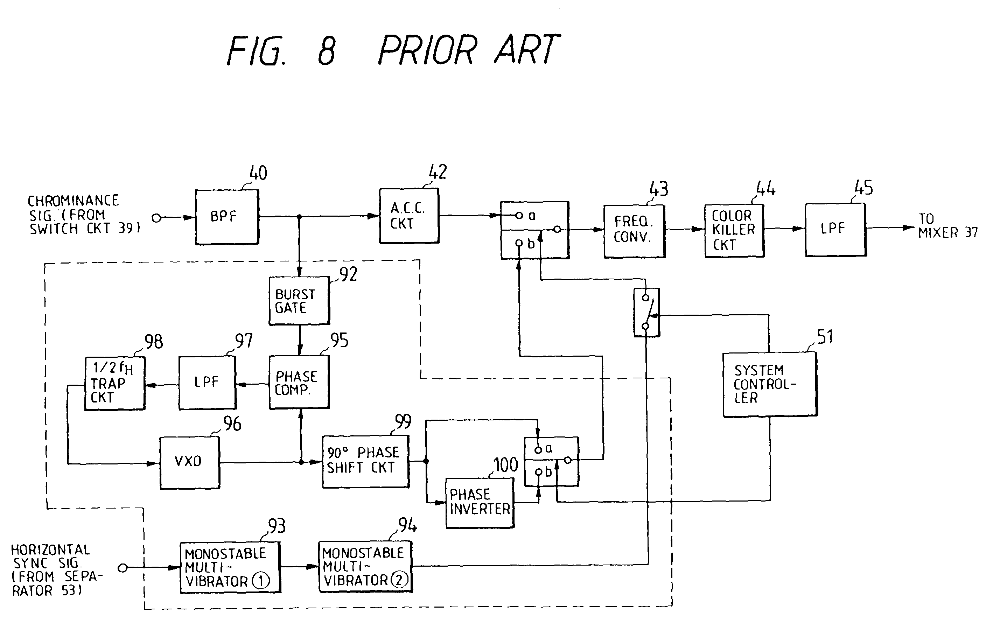

Fig. 8 shows a prior art example of the pilot signal generating circuit 54 shown in Fig. 4, together with an associated portion of the recording system of Fig. 4. In practice, the operation of the VTR of Figs. 4 and 5 is controlled by signals produced by a system controller 51, e.g. signals for establishing the wide-band mode and narrow-band mode, during recording. The pilot signal generating circuit 54 consists of the circuit portion within the broken-line outline in Fig. 8. An APC (automatic phase control) circuit is used, formed of a voltage-controlled quartz crystal oscillator 96, a LPF 97, and a phase comparator circuit 95. It is assumed here that the circuit is for use in a PAL standard VTR, so the APC circuit must also include a 1/2 f_{H} trap circuit 98. This APC circuit produces a CW (continuous wave) output signal which is locked in phase with the average phase of the chrominance burst signal of the input composite video signal, the chrominance burst signal being obtained from a burst gate 92.

The phase of the chrominance burst signal of a PAL standard signal varies by 90° in successive horizontal scanning lines, i.e. alternates between a phase of +45^{o} relative to an average phase value and -45° relative to that average phase. Assuming that sine wave signals are produced from the voltage-controlled quartz crystal oscillator 96 and the burst gate 92, the APC circuit will attain stable operation in a condition in which the phase of the CW output signal is either +90^{o} or -90° relative to the average phase of the chrominance burst signal. Thus if it is assumed that the phase of the CW output signal is +90^{o} relative to the average phase of the chrominance burst signal, i.e. corresponds to the -V axis in Fig. 6, it will be necessary to execute a +90^{o} to obtain a pilot signal phase corresponding to the +U axis (i.e. 0°). A pilot signal phase of 180° can then be obtained by inverting the result. Thus with this prior art circuit of Fig. 8, it is necessary to use both a 90° phase shift circuit 99 and a phase inverter 100, to obtain the two desired pilot signal phase conditions, which can be selected by a switch circuit 130 in accordance with the type of video signal that is being recorded in the wide band mode.

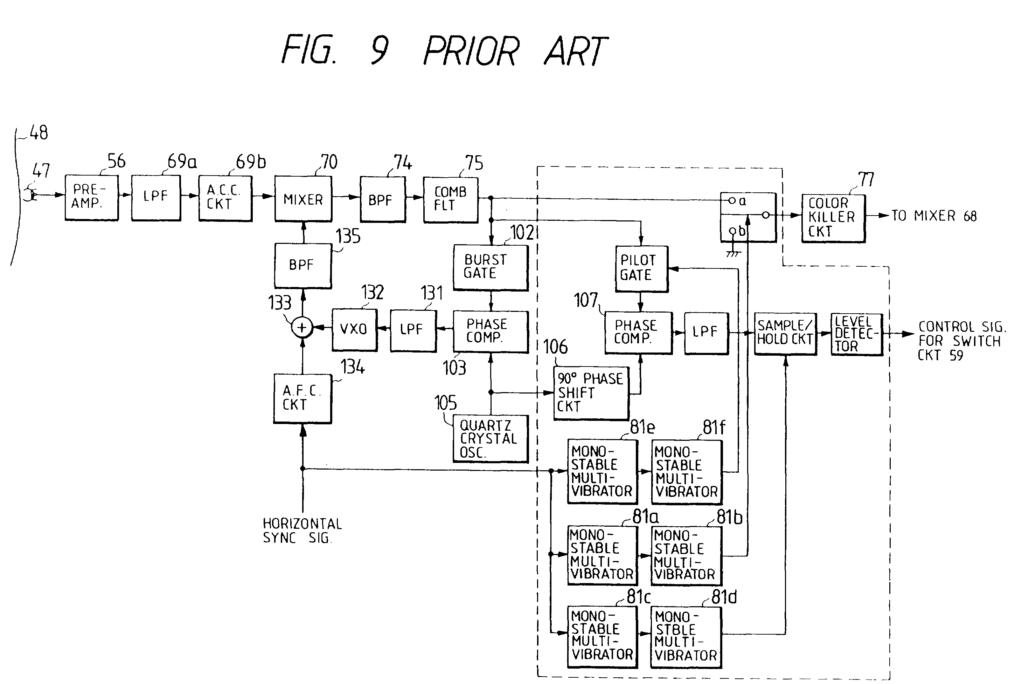

Fig. 9 shows a portion of a playback system corresponding to the recording system of Fig. 8, A playback signal from a pre-amplifier 56 is transferred through a LPF 69a and an A.C.C. circuit 69b to obtain a playback chrominance signal, to be frequency converted in a mixer 70. The portion shown within the broken-line outline corresponds to the monostable multivibrator 81, the pilot signal judgement circuit 82 and the pilot signal cancelling circuit 76 shown in Fig. 5. A detailed description of the operation of such a circuit is given hereinafter, however the operation of the pilot signal judgement circuit 82 portion basically consists of comparing the phase of the pilot signal, obtained by gating the playback chrominance signal, with that of a phase-shifted CW signal. That CW signal is produced as a frequency reference signal from a quartz crystal oscillator 105, and the phase of the chrominance sub-carrier of the up-converted playback chrominance signal is locked to that of the reference signal by an APC circuit, so that the output signal from the quartz crystal oscillator 105 differs by +90° or -90° from the average phase of the chrominance burst signal. It is therefore again necessary to provide a 90° phase shift circuit 106, to obtain a reference signal phase corresponding to the +U or -U axis of Fig. 6, to be used in judging the phase of the pilot signal by means of a phase comparator circuit 107.

It is difficult to manufacture such a 90° phase shift circuit such that a satisfactory temperature characteristic is obtained, and hence it is necessary to provide a special temperature compensation circuit. Thus, it is a disadavantage of a prior art VTR utilizing a pilot signal in the manner described hereinabove that it is necessary to use such a 90° phase shift circuit in the recording and playback systems. obtained from an APC circuit that is locked to the chrominance burst signal phase.

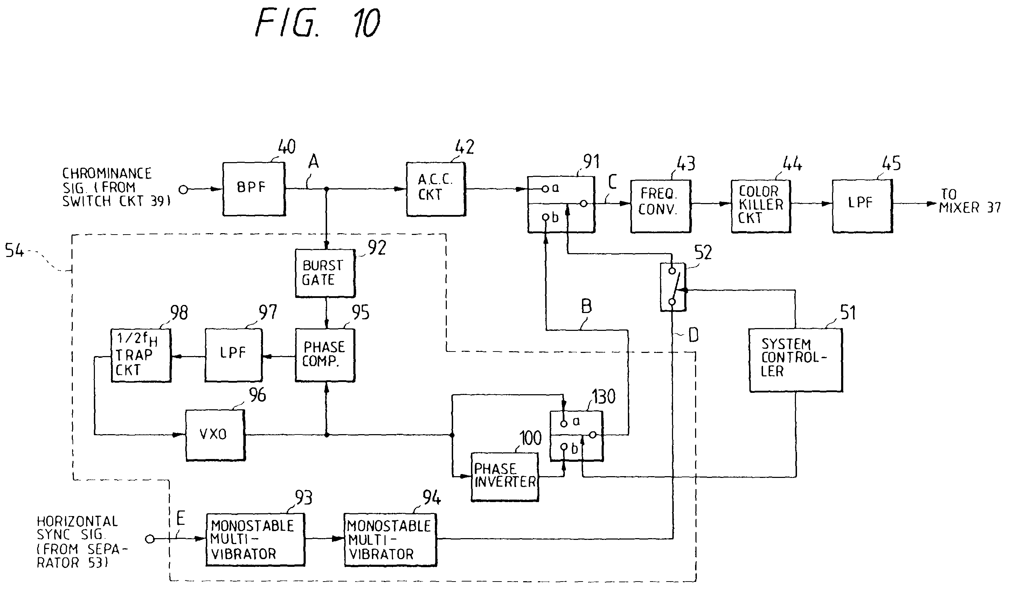

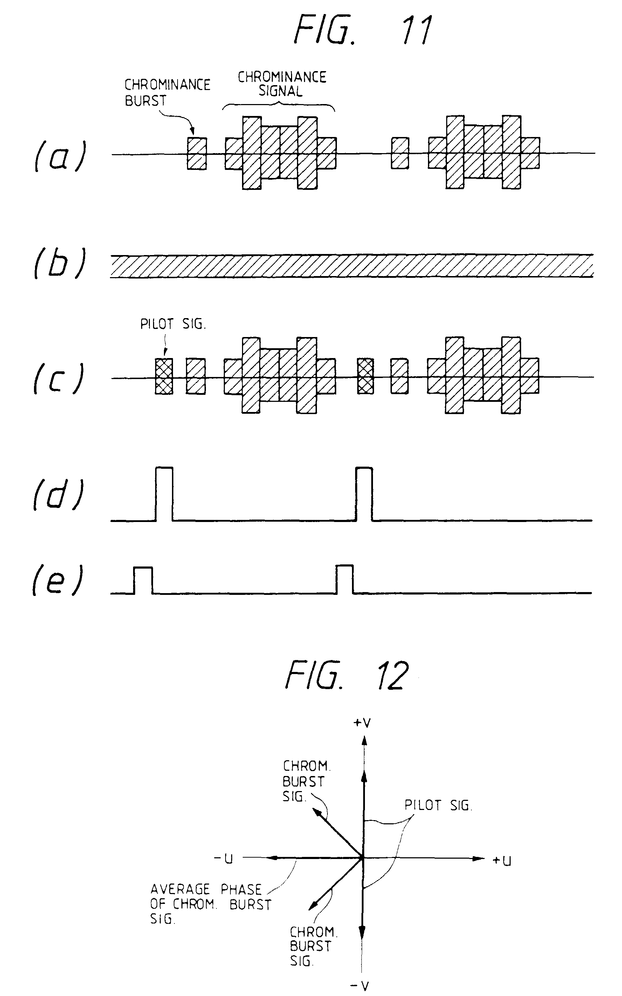

Fig. 10 is a system block diagram showing essential portions of an embodiment of a pilot signal generating circuit for a recording system of a VTR according to the present invention, corresponding to the pilot signal generating circuit 54 in the prior art example of Fig. 4. Fig. 11 shows waveforms at various positions within the circuit of Fig. 10. The circuit portion 54' contained within the broken-line outline directly corresponds to the pilot signal generating circuit 54 of Fig. 4, and blocks having identical functions to those of Fig. 4 are indicated by corresponding reference numerals. The output chrominance signal from BPF 40 (indicated as waveform (a) in Fig. 11) is transferred through the ACC circuit 42 to one input terminal "a" of the switch circuit 91, and is also transferred through a burst gate 92 to one input of a phase comparator circuit 95, to be compared in phase with an output signal from a voltage-controlled quartz crystal oscillator 96. This embodiment is applicable to a PAL standard system, so that after the phase comparator circuit output signal is transferred through a LPF 97 it is transferred through a 1/2 f_{H} trap circuit 98, whose output is applied as a control signal for controlling the frequency and phase of the output signal from voltage-controlled quartz crystal oscillator 96. An APC loop is thereby configured, for producing a CW signal that is phase-locked to the chrominance burst signal, i.e. the loop operation attains stability in that condition. Since the chrominance burst signal frequency (i.e. the chrominance sub-carrier frequency) alternately varies by + and - 45° about an average value in successive horizontal scanning intervals as described hereinabove, the phase of the output signal from the voltage-controlled quartz crystal oscillator 96 is actually locked to this average phase of the chrominance burst signal.

The phase relationships between the voltage-controlled quartz crystal oscillator output signal and the chrominance burst signal are illustrated in Fig. 12. The chrominance burst signal phase is shown as alternating between a value of 180° - 45° and 180° + 45° so that the average value is 180°, corresponding to the -U axis. The phase of the output signal from the voltage-controlled quartz crystal oscillator 96 will differ from that average phase of the chrominance burst signal by ±90°, as described hereinabove, and so will be either 90° or 270° relative to that average phase, i.e. corresponding to the +V or -V axis in Fig. 12.

The CW output signal from the voltage-controlled quartz crystal oscillator 96 is applied directly to one input terminal "a" of a switch circuit 130, and is also transferred through a phase-inversion circuit 100 to the other input terminal "b" of the switch circuit 130. In this way, a signal of phase corresponding to either the +V or the -V axis in Fig. 12 can be selected as output signal from the switch circuit 130 appearing on line B. A system controller 51 controls this selection, by a control signal applied to the switch circuit 130, in accordance with whether a composite video signal is to be recorded in the wide-band mode, or mutually separate Y and C signals are to be recorded in the wide-band mode. The CW signal thus transferred by the switch circuit 130 is periodically selected as described hereinafter to form successive pilot signal bursts, i.e. the pilot signal phase and frequency are those of this CW signal, whose frequency is made identical to the chrominance sub-carrier frequency.

In this embodiment, when the level of high frequency components of the luminance signal contained in the chrominance signal prior to recording are known to exceed a predetermined level, i.e. during recording of a composite video signal in the wide-band mode, the phase of the pilot signal is set to the +V axis shown in Fig. 12, while if that level of high frequency components of the luminance signal within the chrominance signal is known be be below that predetermined value, i.e. during recording of separate Y and C signals in the wide-band mode, then the pilot signal of the pilot signal is set to the - V axis.

The switch circuit 91 functions to add pilot signal burst to the chrominance signal, to be recorded together, i.e. the switch circuit 91 performs the function of the signal adder 41 shown in Fig. 6 described hereinabove. Normally the switch circuit 91 is set to select the "a" input terminal thereof, to supply the chrominance signal from the output of the ACC 42 to the frequency converter 43. When a gating pulse having the waveform (d) shown in Fig. 11 is supplied through switch circuit 52 to control the switch circuit 91, the output signal from switch circuit 130 is transferred to the output of switch circuit 91 for the duration of that gating pulse. The switch circuit 52 is controlled by a control signal from the system controller 51, to be held in the open state during narrow-band mode operation and in the closed state during wide-band mode operation.

The level of the pilot signal is made substantially identical to that of the chrominance burst signal contained in a standard input video signal.

The output signal from the switch circuit 91 (waveform (c) in Fig. 11) is transferred through the frequency converter 43, the color-killer circuit 44, and the LPF 45, to be applied to the mixer circuit 37 shown in Fig. 4. The horizontal synchronizing signal produced from the synchronizing signal separator circuit 53 is applied to the trigger input terminal of a monostable multivibrator 93, whose output triggers a monostable multivibrator 94, to produce a gate signal pulse having the waveform shown in Fig. 11(d) in response to each horizontal synchronizing signal pulse, for controlling the switch circuit 91 as described above.

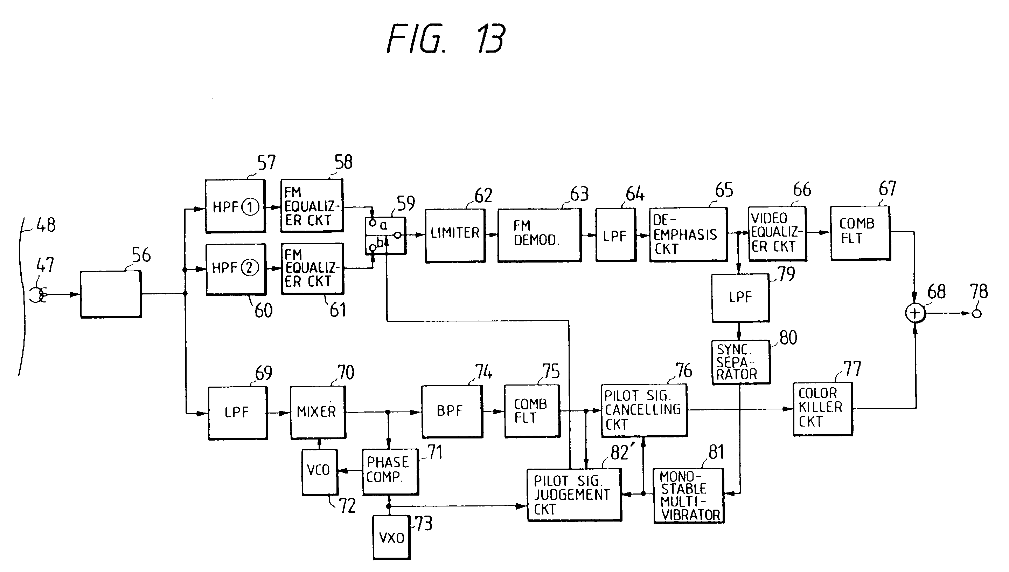

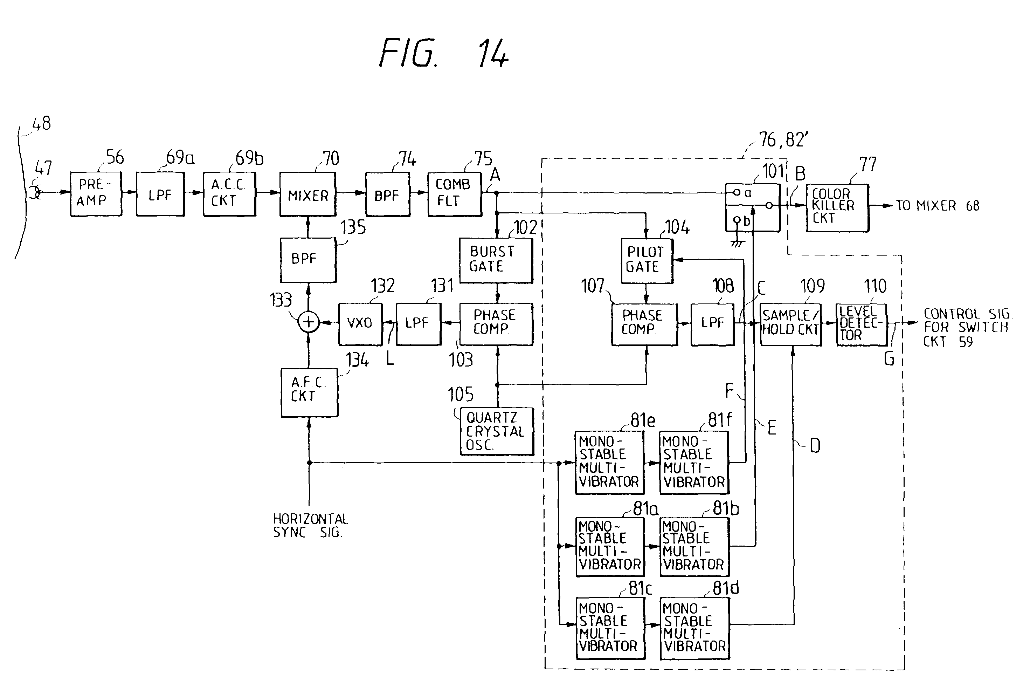

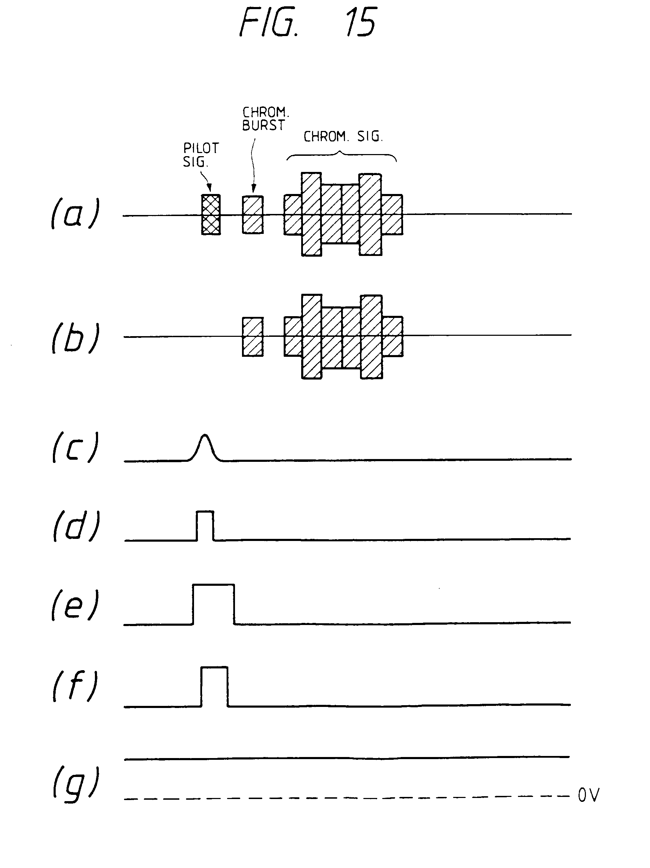

Fig. 13 is a system block diagram of a playback system for use in conjunction with the recording system of Fig. 10 of this embodiment. This playback system is similar to that of the prior art playback system of Fig. 5, described hereinabove, but differs in the configuration of the pilot signal judgement circuit 82'. Fig. 14 is a system block diagram showing a portion of the playback system of this embodiment, including blocks which constitute the pilot signal judgement circuit 82' and also the pilot signal cancelling circuit 76, contained within the broken-line outline. Waveforms at various positions in Fig. 14 are illustrated in Fig. 15. In Fig. 14, the playback chrominance signal produced from comb filter 75 (waveform 15(a)) is applied to the "a" input terminal of a switch circuit 101, whose other input terminal "b" is connected to ground potential. The output terminal of switch circuit 101 is normally coupled to input terminal "a", and is only connected to input terminal "b" during each of gate signal pulses (Fig. 15(e) waveform) which are produced as described hereinafter. Pilot signal cancellation is thereby executed. The resultant chrominance signal with the pilot signal eliminated (waveform of Fig. 15(b)) is transferred through the color killer circuit 77 to the mixer 68 shown in Fig. 13.

The horizontal synchronizing signal of the playback signal (from the synchronizing signal separator circuit 80 of Fig. 13) is applied to the trigger input of monostable multivibrator 81a which triggers a monostable multivibrator 81b, to thereby produce the gate signal pulses described above which actuate switch circuit 101. This horizontal synchronizing signal is also applied monostable multivibrator pair 81c, 81d, which produces sampling pulses having the waveform shown in Fig. 15(d), and to monostable multivibrator pair 81e, 81f which produce pilot signal gate pulses having the waveform of Fig. 15(f). The sampling pulses from monostable multivibrator 81d are applied to a sample-and-hold circuit 109, while the pilot signal gate pulses are applied to a pilot signal gate 104.

The playback chrominance signal that is outputted from the comb filter 75 (waveform of Fig. 15(a)) is gated through the burst gate 102 at appropriate timings for separating the chrominance burst signal, which is supplied to a phase comparator circuit 103 for executing automatic phase control, with a frequency reference signal produced from a quartz crystal oscillator 105 being applied to the other input of the phase comparator circuit 103. The output from the phase comparator circuit 103 is transferred through a LPF 131 to produce a control signal that controls the phase of a CW output signal that is generated by a voltage-controlled quartz crystal oscillator 132. This signal is applied to one input of a mixer 133, while a CW signal whose frequency is an appropriate multiple of the horizontal scanning frequency f_{H} and is phase-locked to the horizontal synchronizing signal is produced from a frequency multiplier circuit 134 and applied to the other input of the mixer 133. The resultant output signal from the mixer 133 is transferred through a BPF 135 to obtain a signal for use in frequency conversion of the chrominance signal. Such a signal is sometimes referred to as a "local oscillator" signal, but is referred to in the following as a frequency conversion signal, which is applied to one input of the mixer 70 to execute frequency up-conversion of the playback chrominance signal.

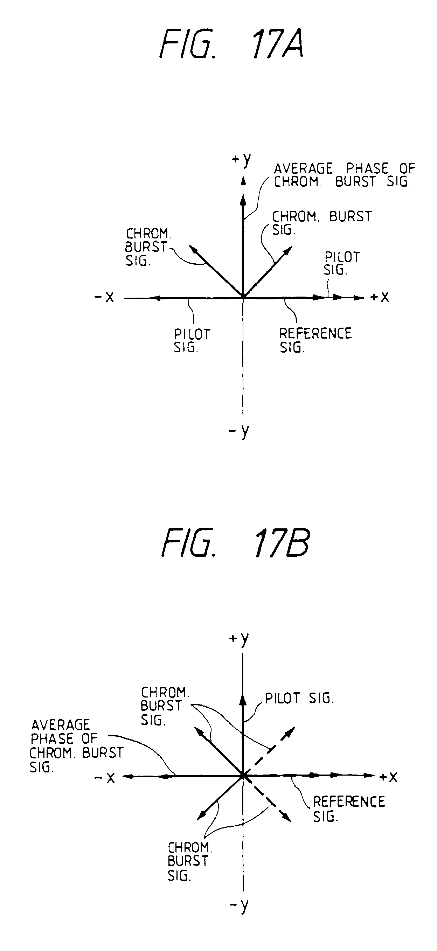

The pilot signal bursts contained in the playback chrominance signal are separated by means of a pilot signal gate 104 in response to the pilot signal gate pulses (waveform of Fig. 15(f)), and supplied to one input of the phase comparator circuit 107, to be phase-compared with the frequency reference signal that is outputted from the quartz crystal oscillator 105. The frequency of this reference signal is equal to the standard value of the chrominance sub-carrier f_{SC}, i.e. the chrominance burst signal frequency. The blocks 70, 74, 75, 102, 103, 131 to 133, 135 and 105 constitute an APC loop, which operates in a stable condition when the average phase of the chrominance burst signal in the chrominance signal that is outputted from the comb filter 75 is fixed at a value which is displaced by 90° from the phase of the reference signal from the quartz crystal oscillator 105. Designating the reference signal phase as 0°, i.e. corresponding to the +X axis shown in Fig. 17A, the average phase of the chrominance burst signal will be 90°, corresponding to the +Y axis. In addition, the phase of the pilot signal will be 0^{o} (the +X axis) if that phase was set in the +U state of Fig. 12 at the time of recording, and will be 180° (the -X axis) if that phase was set in the -U state at the time of recording. In this way, since the pilot signal is displaced in phase by 90° from the average phase of the chrominance burst signal, the phase of the pilot signal that is supplied to the pilot signal gate 104 will be either in phase or 180° out of phase with respect to the reference signal from quartz crystal oscillator 105. Thus, it is not necessary to utilize a 90° phase shifting circuit to executed judgement of the pilot signal phase, i.e. the output from the LPF 108 (which removes high frequency signal components of the pilot signal) will go to a high level for the in-phase state of the pilot signal, and will go to a low level in response to the out-of-phase state of the pilot signal. The level of the output signal from LPF 108 is temporarily held in the sample-and-hold circuit 109, to be sensed by the level detection circuit 110, which thereby produces an output signal representing the information expressed by the pilot signal phase, e.g. which goes to a logic H level in response to the in-phase state of the pilot signal and to a logic L level for the inverse phase of the pilot signal. This output signal from the level detector circuit 110 is applied as a control signal to the switch circuit 59, described hereinabove.

It should be noted that it may be possible to omit the sample-and-hold circuit 109, in some cases.

The timing of the sampling pulses applied to the sample-and-hold circuit 109 is selected such as to coincide with the timing at which the output signal from the LPF 108 attains a maximum value, when the pilot signal is in the in-phase condition, and the timing at which the output signal from LPF 108 attains a minimum value, when the pilot signal is 180ₒ different in phase from the reference signal.

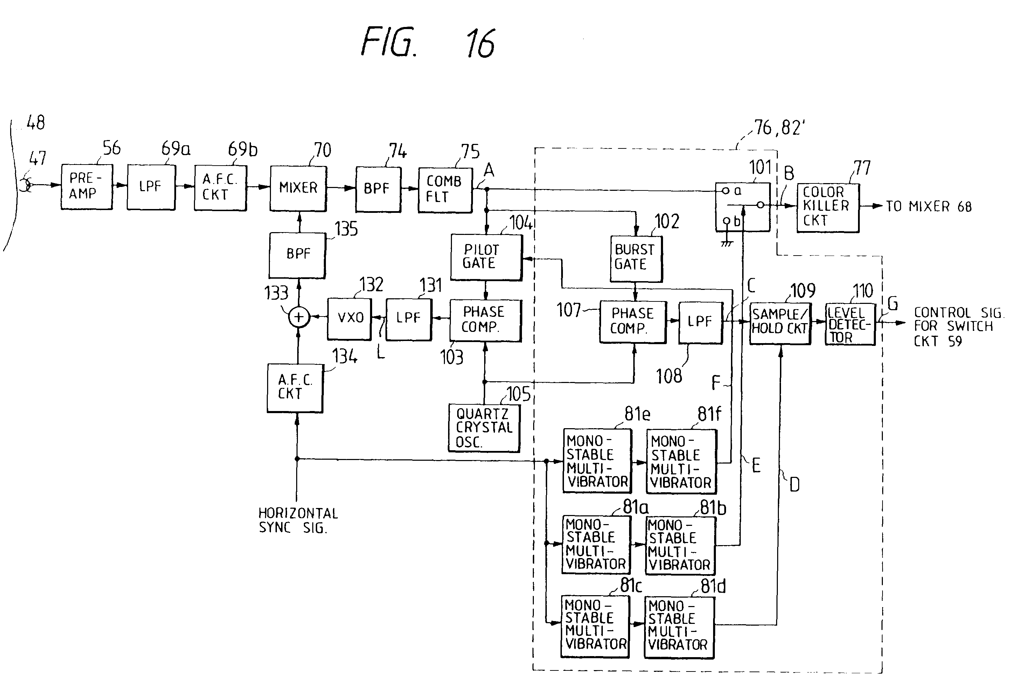

Fig. 16 shows another embodiment of the pilot signal judgement circuit 82' of Fig. 13, with blocks which constitute the pilot signal judgement circuit 82' and also the pilot signal cancelling circuit 76 being contained within the broken-line outline, as in Fig. 14. This embodiment differs from that of Fig. 14 in that the pilot signal in that the operation of the APC loop that controls the chrominance sub-carrier frequency (i.e. the chrominance burst signal frequency) is based upon the pilot signal contained in the playback signal, rather than on the chrominance burst signal. This is illustrated in the phase diagram of Fig. 17B. In this case, again designating the phase of the reference signal from voltage-controlled quartz crystal oscillator 105 as 0° (the +X axis), the phase of the pilot signal is displaced from that by 90° i.e. is on the +Y axis. If the phase of the recorded pilot signal corresponds to the +V axis in Fig. 12, then the average phase of the chrominance burst signal signal obtained from the APC loop of Fig. 16 will differ by 180° from the reference signal phase, i.e. corresponds to the -X axis in Fig. 17b, while if the phase of the recorded pilot signal corresponds to the -V axis in Fig. 12, then the average phase of the chrominance burst signal signal obtained from the APC loop of Fig. 16 will be in phase with the reference signal produced by the quartz crystal oscillator 105. The phase of the pilot signal is therefore judged on the basis of the chrominance burst signal phase determined by the APC loop, with the chrominance burst signal being either in phase or phase-inverted with respect to the frequency reference signal of the APC loop. Thus, the chrominance burst signal and the pilot signal are utilized in the opposite way to that of the embodiment of Fig. 14. This is advantageous with respect to the operation of the APC loop. That is to say, in the embodiment of Fig. 14 since the phase of the chrominance burst signal alternates on successive scanning lines as described above, a corresponding amplitude alternation will appear in the phase error signal that appears at the output of the LPF 131, i.e. an alternation in amplitude of the control voltage applied to the voltage-controlled quartz crystal oscillator 132. This results in reduced stability of APC operation, and an excessively long pull-in time for the control loop. With the embodiment of Fig. 16 on the other hand, the APC loop is controlled based on the phase of the pilot signal, which does not alternate in successive horizontal scanning intervals. Thus, the output from the LPF 131 will not alternate in amplitude, i.e. the phase error does not alternate for successive scanning lines, so that more stable APC loop operation with faster pull-in is achieved.

It can thus be understood that a VTR incorporating a recording system having a pilot signal generating circuit according to the embodiment of the present invention of Fig. 10, and a playback system having a pilot signal judgement circuit according to the present invention according to the embodiment of Fig. 14 or Fig. 16 provides the advantage of eliminating the requirement for respective 90° phase shift circuits for phase shifting the pilot signal, in the recording and playback systems. The manufacturing cost of such a VTR is thereby reduced, together with greater stability of the generated pilot signal phase and stability of pilot signal phase judgement. In addition, without such 90° phase shift circuits, the overall VTR circuits can be more easily implemented as an integrated circuit. Moreover as a result of eliminating these 90° phase shift circuits, it becomes unnecessary to provide temperature control circuit components for such circuits, so that the overall circuitry is further simplified. Furthermore, if the pilot signal phase is utilized for phase comparison in the recording system APC loop that stabilizes the chrominance burst signal phase, as in the embodiment of Fig. 16, then greater stability of APC control is achieved, in the case of a PAL standard system in which the phase of the chrominance burst signal varies in successive horizontal scanning intervals.

It can thus be understood that the embodiments of the present invention described above facilitate the manufacture of a VTR having a pilot signal control function and selectable narrow-band mode and wide-band mode types of operation, whereby information expressed by the pilot signal phase indicates whether the level of luminance signal high frequency components contained in the chrominance signal of a video signal recorded in the wide-band mode is above or below a specific level, i.e. whether a recorded video signal was derived from a composite video signal having luminance signal and chrominance signal components frequency-multiplexed therein, or was derived from mutually separate luminance and chrominance signals, and whereby this pilot signal information is utilized during playback to control the cut-off frequency of a filter used to separate the luminance signal from the playback signal, thereby preventing beat interference between that luminance signal and high frequency luminance signal components contained in the playback chrominance signal.

Generally speaking, in a practical VTR apparatus, a pair of recording heads are utilized mounted on a head cylinder, which have mutually different azimuth angles. Usually, only a very small guard band (or no guard band) is provided between mutually adjacent tracks formed on the magnetic tape by these heads during recording, in order to maximize the tape utilization efficiency. As is well known, the azimuth angles of the recording heads have the effect of reducing the amount of crosstalk which is produced in the frequency down-converted chrominance signal (obtained by frequency conversion of the chrominance signal of the input video signal prior to recording, as described hereinabove) by the recording and playback process. However this azimuth crosstalk suppression effect is only effective at relatively high frequencies, and is not effective for low frequency components contained in the down-converted chrominance signal. For this reason, it is necessary to implement countermeasures against this low-frequency region crosstalk. A VTR which utilizes a method of counteracting such crosstalk has been described by the assignees of the present invention in Japanese Patent Laid-open No. 56-9073 and Japanese Patent Laid-open No. 55-32273. With this method, which is known as the PS (phase shift) technique, prior to recording, the chrominance sub-carrier of the frequency down-conversion signal, is phase-shifted by 90° at the start of each horizontal scanning interval, with these successive 90° phase shifts being in a fixed direction. During playback, the chrominance sub-carrier of the frequency up-converted chrominance signal is phase-shifted by 90° once in each horizontal scanning interval, in the opposite direction to the phase-shifting that was done during recording, i.e. such as to cancel the successive phase-shifts that were executed prior to recording. The resultant chrominance signal is then passed through a comb filter, whereby crosstalk components in the chrominance signal are effectively eliminated.

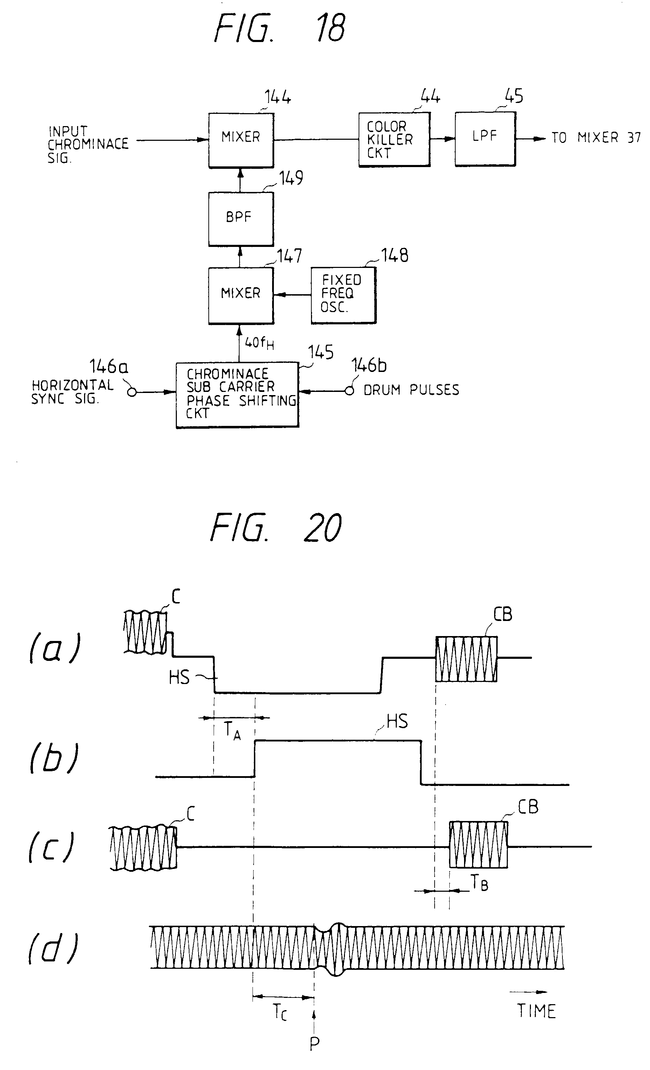

Fig. 18 is a general block system diagram of a portion of the chrominance signal recording system in an example of a prior art VTR which utilizes this PS method. This circuit portion serves both to execute the successive 90° phase shifting operations described above and also to execute frequency down-conversion of the input chrominance signal, i.e. the function performed by the frequency converter 43 in Fig. 4, for example. A chrominance signal having pilot signal bursts added as described hereinabove, for example the output signal from adder 41 in Fig. 4, is applied to one input of a mixer 4. It will be assumed that the video signal to be recorded is a PAL standard signal, having a chrominance sub-carrier frequency f_{SC} of approximately 4.43 MHz. The horizontal synchronizing signal separated from the playback signal (e.g. by the synchronizing separator circuit 53 in Fig. 4) is supplied to a chrominance sub-carrier phase shifting circuit 145, to which is also applied a drum pulse signal consisting of a pulse train with a repetition frequency of 25 Hz, which is generated in phase synchronization with rotation of the head cylinder of the VTR. The repetition frequency of this horizontal synchronizing signal will be designated in the following as f_{H}.

During one 1/2 revolution of the head cylinder, in which one track is formed on the magnetic tape by one of the magnetic heads with one field of the video signal being recorded on that track, the chrominance sub-carrier phase shifting circuit 145 produces an output signal which is a pulse train having a frequency that is 40 times horizontal synchronizing frequency, i.e. 40f_{H}, and having a fixed phase. This phase value will be designated as a reference phase of 0°. During the next 1/2 revolution of the head cylinder, in which the next field of the video signal is recorded on a succeeding track by the other magnetic head, immediately adjacent to the first-mentioned track, the output signal from the chrominance sub-carrier phase shifting circuit 145 is again 40f_{H}, but in which the phase is shifted by 90° once in each horizontal scanning interval. These successive phase shifts take place in a fixed direction, i.e. in the sequence 0°, 9pm 180°, 270°, ...... This output signal is supplied to one input of a mixer 147, to be mixed with an output signal from an oscillator 148, which has a fixed frequency of (f_{SC} + 1/8 f_{H}) The resultant output signal from the mixer 147 is transferred through a BPF 149, which separates a component of that output signal having a frequency of(f_{SC} + 40 f_{H} + 1/8 f_{H}) , which is supplied to the other input of the mixer 4. The output signal from the mixer 4 is transferred through the color-killer circuit 44 and LPF 45 to obtain the desired frequency down-converted chrominance signal having a chrominance sub-carrier frequency f_{C} of (40 f_{H} + 1/8 f_{H}), which is thereafter frequency-multiplexed with the luminance signal for recording as described hereinabove.

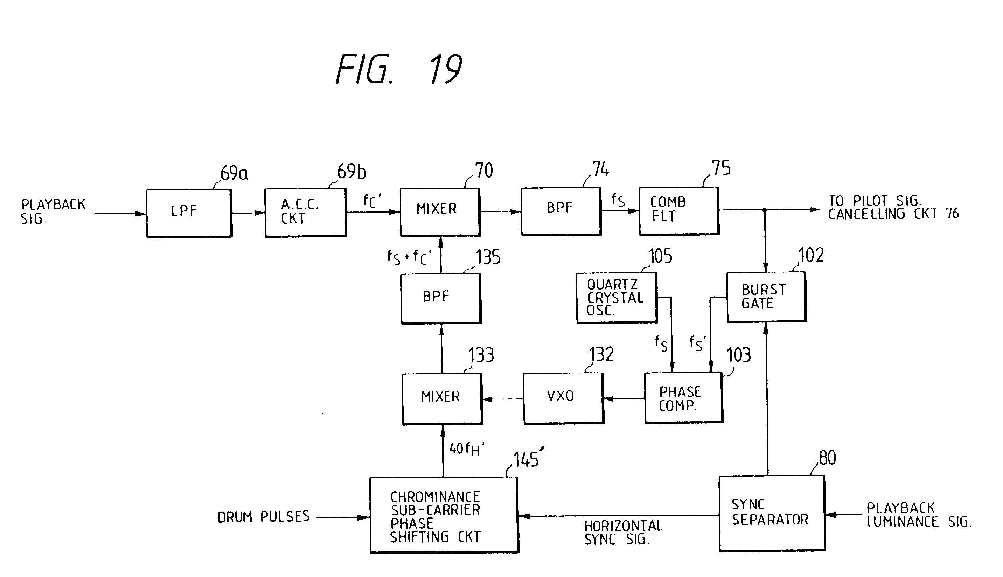

Fig. 19 shows a playback system for the VTR having the recording system of Fig. 18, with an LPF 69a, mixer 70, BPF 74 and comb filter 74 respectively corresponding to the identically numbered components in the example of Fig. 4 described above. The frequency down-converted chrominance signal that is separated from the playback signal by the LPF 69a has a chrominance sub-carrier frequency f_{SC}', and is applied to the mixer 70 together with a signal of frequency (f_{S} + f_{SC}') produced from a BPF 135 as described hereinafter, for frequency up-conversion. The output signal from the mixer 70 is transferred through the BPF 74 to obtain a playback chrominance signal having the original chrominance sub-carrier frequency f_{SC}. This is transferred through the comb filter 75, which includes a 2 H delay circuit for removing crosstalk components, and hence to the pilot signal cancelling circuit 76 shown in Fig. 5. The output chrominance signal from comb filter 75 is also applied to a burst gate circuit 102, which also receives horizontal synchronizing signal pulses derived from the playback signal by synchronizing signal separator circuit 80, and which separates the chrominance burst signal of the playback chrominance signal. As during recording operation, the separated horizontal synchronizing signal is also applied to the chrominance sub-carrier phase shifting circuit 145, together with the drum pulse signal. The phase comparator circuit 103 compares the phase of the chrominance burst signal, having a sub-carrier frequency of f_{SC}' and which includes time-axis deviations, with the phase of an output signal from an oscillator 105 having a fixed frequency of f_{S}. A resultant phase comparison signal is applied as a control voltage to control the phase and frequency of an output signal produced by a voltage-controlled quartz crystal oscillator 132. This output signal from the voltage-controlled quartz crystal oscillator 132 has a frequency of (f_{S} + 1/8 f_{H}'), and has identical time-axis deviations to those of the playback chrominance signal. The output signal from voltage-controlled quartz crystal oscillator 132 is applied to one input of a mixer 133, to which is also applied an output signal from the chrominance sub-carrier phase shifting circuit 145. Phase shifting circuit 145 produces an output signal having a frequency of 40 f_{H}', such that during one field of the video signal the phase of this output signal is shifted by 90^{o} in each of successive horizontal scanning intervals with a fixed direction of phase shift, during the succeeding field the phase of the output signal is not shifted, and so on during alternate fields. The direction of phase shift is such as to cancel the successive 90° phase shifts of the chrominance sub-carrier frequency that were introduced during recording by the circuit of Fig. 18.

The output signal thus produced from the mixer 133 is transferred through the BPF 135, to obtain an output signal having frequency(f_{S} + 40 f_{H}' + 1/8 f_{H}') , i.e. (f_{S} + f_{C}'). Thus, the output chrominance signal from the BPF 74 has a chrominance sub-carrier frequency f_{SC}' with the 90° phase shifts applied during recording having been eliminated, and which has been up-shifted to the original frequency band of the chrominance signal prior to recording.

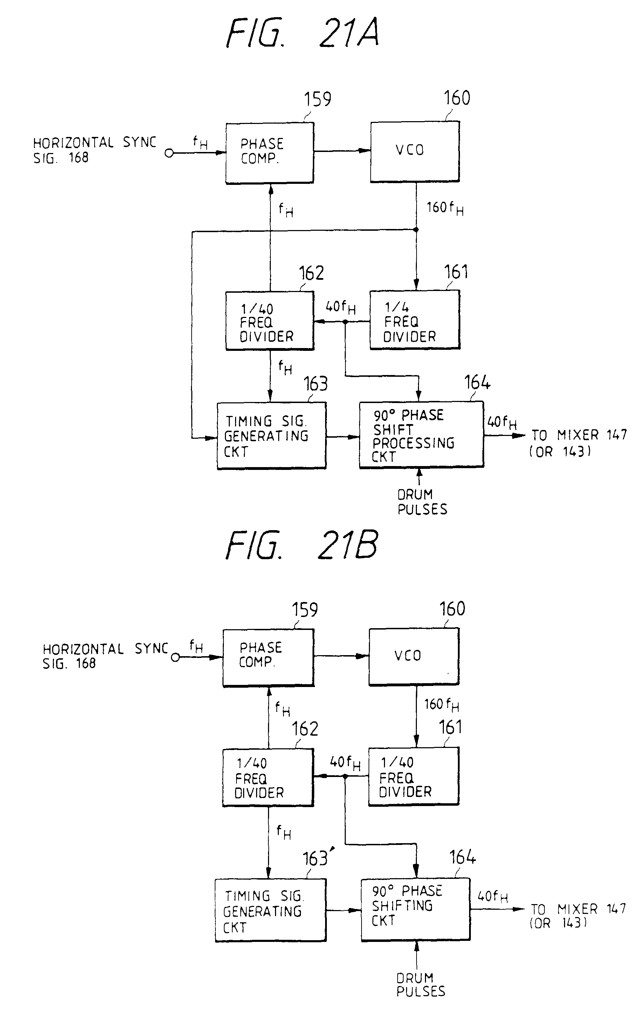

The operation of this prior art circuit of Fig. 19, when used in a VTR in which no pilot signal is inserted during recording, is illustrated in the waveform diagram of Fig. 20. Fig. 20(a) shows a horizontal synchronizing pulse HS and a chrominance burst signal CB that occur during a horizontal blanking interval of the input composite video signal or the playback video signal. With the prior art chrominance sub-carrier phase shifting circuit 145, an operation for executing a 90° phase shift of the output signal is initiated in response to a leading edge of an input horizontal synchronizing pulse HS. However as shown in Fig. 20(a), a time delay T_{A} occurs following the start of a horizontal synchronizing pulse HS of the video signal, until the start of the corresponding horizontal synchronizing pulse that is outputted from the synchronizing signal separator circuit. In addition, due to delays within the chrominance sub-carrier phase shifting circuit 145 itself, a further delay time T_{C} will elapse before the phase of the output signal from the chrominance sub-carrier phase shifting circuit 145 is actually shifted by 90°, as shown in Fig. 20(d) which illustrates this output signal, i.e. phase switching occurs at the instant P shown in Fig. 20(d), i.e. this is the timing at which the phase of the output signal from the BPF 149 (or 135) will be shifted by 90^{o}. For a short time after this phase switching occurs, the frequency of the output signal from BPF 149 (or 135) (which functions as a frequency conversion input signal to the mixer 4) is unstable, exhibiting amplitude and phase variations. However a sufficient time elapses following this phase shift timing P until the start of the succeeding chrominance signal burst CB, so that no adverse effects on the chrominance burst signal will occur. Fig. 20(c) illustrates the chrominance signal that is applied to the mixer 4 (or 70), and shows how this time is further increased by a time difference T_{B} between the video signal from which the horizontal synchronizing signal is separated and the timing of a chrominance burst CB applied to the mixer 4 (or 70), as shown in Fig. 20(c), which results from the effects of the BPF that separates the chrominance signal during recording, or the LPF 69a during playback.

However when pilot signal bursts are inserted into the blanking intervals of the chrominance signal prior to recording, as described hereinabove, these pilot signal bursts are positioned approximately midway between the end of the chrominance signal portion (designated as C in Fig. 20) of one horizontal scanning interval and the chrominance burst CB of the start if the next horizontal scanning interval, i.e. approximately the timing of the phase switching point P in Fig. 20. Thus, if it is attempted to implement the sequential 90° phase shifting/phase shift cancellation method of crosstalk suppression described hereinabove in a VTR having the aforementioned pilot signal control function, satisfactory operation will not be possible due to the adverse effects of the phase switching of the frequency conversion signal used for frequency down-conversion of the chrominance signal prior to recording, and of the frequency conversion signal used for up-conversion during playback.

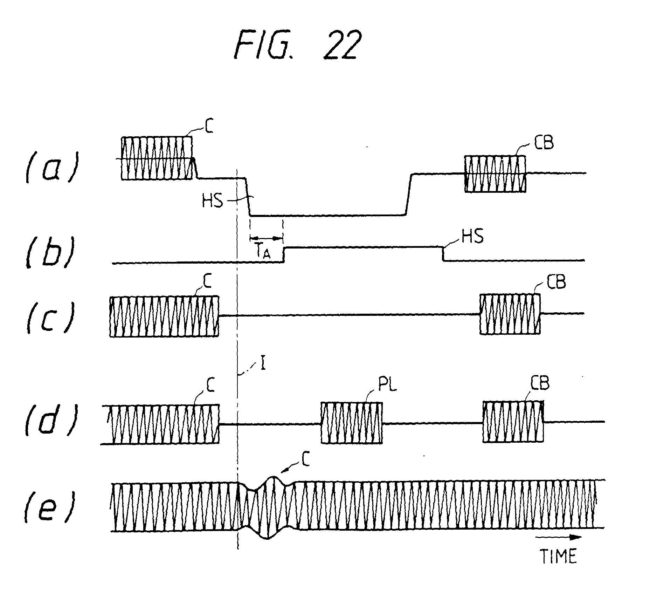

Fig. 21A is a system block diagram of an embodiment of a chrominance sub-carrier phase shifting circuit for a VTR according to the present invention, corresponding in function to the chrominance sub-carrier phase shifting circuit 145 of the prior art examples of Fig. 18 or Fig. 19 described above, whereby the timing of each phase switching operation-which initiates a 90° phase shift of the chrominance sub-carrier is made to occur within the "front porch" portion of each horizontal blanking interval, to thereby overcome the problem described above. In Fig. 21A a horizontal synchronizing signal of frequency f_{H} (separated from the input video signal in the case of the recording system as in Fig. 18, or from the playback video signal in the case of the playback system as in Fig. 19) is applied from an input terminal 168 to one input of a phase comparator circuit 159, which receives a periodically 90° phase-shifted signal of frequency f_{H} (generated as described hereinafter) at another input thereof. The output signal from the phase comparator circuit 159 is applied as a control voltage for controlling the frequency of a voltage controlled oscillator (VCO) 160. It will be assumed that the video signal that is recorded/reproduced is a PAL standard signal, so that the signal waveform during a horizontal blanking interval is approximately as shown in Fig. 22(a), containing a horizontal synchronizing pulse HS. When this horizontal synchronizing pulse is separated from the signal of Fig. 22(a) by a synchronizing signal separator circuit, the resultant horizontal synchronizing pulse HS will be delayed by a time TA with respect to the horizontal synchronizing pulse of the video signal, as illustrated in Fig. 22(b). The VCO 160 produces an output signal having a center frequency of 160 f_{H}, which is frequency-divided by a 1/4 frequency divider 161 to obtain a signal of frequency 40 f_{H}. This is again divided in a 1/40 frequency divider 162, to obtain a pulse train signal of frequency f_{H} that is supplied to the other input of the phase comparator circuit 159, and which is also supplied to an input of a timing signal generating circuit 163. The 160f_{H} output signal from the VCO 160 is applied to another input of the timing signal generating circuit 163. The phase comparator circuit 159, VCO 160, 1/4 frequency divider 161 and the 1/40 frequency divider 162 form a closed loop which functions as a phase lock loop (PLL), whereby the output signal from the 1/40 divider 162 is a pulse train signal of frequency f_{H} that is phase-locked to the input horizontal synchronizing signal from input terminal 168.

The timing signal generating circuit 163 of this embodiment includes a counter circuit (not shown in the drawings) for counting the 160 f_{H} output signal from the VCO 160, this counter being periodically reset by thee f_{H} signal from the 1/40 frequency divider 162. After a fixed delay time delay following each pulse of the f_{H} signal from the 1/40 frequency divider 162, (the delay value being determined by counting a specific number of pulses of the 160 f_{H} signal) the timing signal generating circuit 163 generates a timing pulse at a time which is within the "front porch" region of a blanking interval of the video signal from which the horizontal synchronizing signal (applied to input terminal 168) was separated, i.e. a time immediately prior to a horizontal synchronizing pulse of that video signal. This timing is designated as I in Fig. 22.

The timing pulses thus generated are supplied to a 90° phase shift processing circuit 164, together with the drum pulses (having a period of 2 field intervals, as described hereinabove) supplied from an input terminal 146, and the signal of frequency 40 f_{H} that is produced from the 1/4 frequency divider 161.

In this embodiment, the 90° phase shift processing circuit 164 includes a circuit for generating in parallel four signals each of frequency 40 f_{H}, which have respective phases of 0°, 90°, 180°, and 270°, and also includes a switch circuit for selecting successive ones of these four signals during successive horizontal scanning intervals, with the timing of each switching operation for selecting a signal of different phase being determined by a timing pulse from the timing signal generating circuit 163. In this way, successive 90° phase shifts of the output signal from this switch circuit each occur at the timing I shown in Fig. 22, prior to each horizontal synchronizing pulse of the video signal that is recorded or played back. The 90° phase shift processing circuit 164 further includes a controller, responsive to the drum pulses supplied from terminal 146, for enabling the aforesaid switching operations of the switch circuit during one out of every two successive field intervals of the video signal, and inhibiting switching during the remaining field intervals. In this way, successive 90° phase shifting of the chrominance sub-carrier occurs only during alternate field intervals, as described hereinabove.

The switching sequence executed by the aforementioned switch circuit within the 90° phase shift processing circuit 164 during playback is the opposite to that during recording. Thus, assuming that a single circuit as shown in Fig. 21 is used in common for both recording and playback operation frequency conversion, if for example at the start of a field the phase shifting executed by circuit 164 is in the sequence 90°, 180°,....., then during playback the sequence executed by that circuit will be 270°, 180°, 90°,..... In this way, cancellation of the successive 90° phase shifts is achieved at the time of playback.

The output signal from the 90° phase shift processing circuit 164 is supplied to a mixer 147 (or 133) as shown in Fig. 18 (or 19), for deriving a frequency conversion signal to be applied to a mixer 144 (or 70) to execute frequency down-conversion (or up-conversion) of the chrominance signal. As can be understood from Fig. 22(e), which shows the resultant frequency conversion signal that is produced from BPF 149 (or 135) for chrominance sub-carrier frequency conversion, a temporary phase disturbance of that output signal (indicated as C) resulting from 90° phase switching will occur prior to the start of each pilot signal burst PL, by a sufficient amount of time such that the phase switching will have no adverse effect upon the pilot signal burst. Thus, the disadvantages of the prior art circuits of Figs. 18 and 19 are effectively eliminated.

Thus with this embodiment, phase control of the chrominance sub-carrier phase is implemented in two modes, during both recording and playback. In one mode, which is established in one out of every two successive field intervals of the video signal that is recorded or reproduced, the phase of the frequency conversion signal that is applied to a mixer to execute frequency conversion of the chrominance sub-carrier is shifted by 90° at the start of each horizontal scanning interval, with each phase shift occurring at a time point which is within the "front porch" portion of a horizontal synchronizing pulse. In the other mode, which is established during one out of every two field intervals in alternation with the first-mentioned mode, the phase of that frequency conversion signal is not shifted.

Fig. 21B shows a second embodiment which is essentially similar to that of Fig. 21A, but differs in that only the output signal from the 1/40 frequency divider 162 is supplied to the timing signal generating circuit 163', and in that the circuit 163' incorporates a timer circuit, which generates a timing pulse following a predetermined delay after an input pulse is supplied from the 1/40 frequency divider 162. The value of this delay is determined such that each timing pulse occurs within the front porch portion of a blanking interval of the video signal from which the sync pulses applied to input terminal 168 were separated.

Of the circuits of Figs. 21A and 21B, that of Fig. 21A is preferable, since highly precise timing of generating the timing pulses from circuit 163 is attained by counting high-frequency pulses that are generated by the phase lock loop circuit which determines the frequency of the output signal from the 90 phase shift processing circuit 164. With the circuit of Fig. 21B on the other hand, a fixed delay of value close to the duration of one horizontal scanning interval must be implemented within circuit 163'.

It would also be possible to envisage setting the timing of each 90° phase shift of the aforementioned frequency conversion signal at a position intermediate between the end of a pilot signal burst PL (in Fig. 22(d)) and the start of the succeeding chrominance burst signal CB. However this has the disadvantage that phase disturbances (e.g. as indicated by C in Fig. 22(e)) may affect the chrominance burst signal CB. This can cause serious deterioration of picture quality, i.e. the system is very much more sensitive to slight phase disturbances of the chrominance burst signal than to those of the pilot signal. In addition, such a method would have the disadvantage that the phase of the pilot signal burst occurring at the start of each horizontal scanning interval will be different from that of the chrominance burst signal of that horizontal scanning interval. This will result in the circuit used for detection of the phase of the pilot signal becoming necessarily more complex, and so of increased scale, by comparison with the method whereby 90° phase switching occurs immediately prior to pilot signal burst at the start of each horizontal scanning interval.

Although the present invention has been described in the above with reference to embodiments of a VTR having a pilot signal control function, for recording/playback of PAL standard signals, the invention is equally applicable to a VTR having a pilot signal control function, for recording/playback of an NTSC standard signal.

Thus, although the present invention has been described in the above referring to specific embodiments, it should be noted that various modifications to these may be envisaged, which fall within the scope claimed for the present invention.

## Claims

1. In a magnetic recording apparatus for recording on a magnetic recording medium an input luminance signal and an input chrominance signal of an input video signal, including means for recording said input video signal comprising means for frequency modulating said input luminance signal to obtain an FM luminance signal, means for generating a first frequency conversion signal, first mixer circuit means responsive to said input chrominance signal and first frequency conversion signal for producing a frequency down-converted chrominance signal, said first frequency conversion signal generating means functioning to phase shift said first frequency conversion signal by 90° once in each horizontal scanning interval of a field interval of said chrominance signal with a fixed direction of phase shifting, and means for recording said frequency down-converted chrominance signal and FM luminance signal as a frequency multiplexed video signal on a magnetic medium, and moreover including means for playback of said magnetic medium to obtain a playback signal and for separating said FM luminance signal and frequency down-converted chrominance signal from said playback signal and demodulating said FM luminance signal to obtain a playback luminance signal, means for generating a second frequency conversion signal, said second frequency conversion signal generating means functioning to phase shift said second frequency conversion signal by 90° once in each horizontal scanning interval of a field interval of said playback signal in a direction opposite to that of said first frequency conversion signal phase shifting, and second mixer means responsive to said frequency down-converted chrominance signal and said second frequency conversion signal for producing a playback chrominance signal, with said first frequency conversion signal generating means comprising means for separating a horizontal synchronizing signal from said input luminance signal and said second frequency conversion signal generating means comprising means for separating a horizontal synchronizing signal from said playback luminance signal,
characterized in that
each of said first and second frequency conversion signal generating means comprises:
timing signal generating means operating in synchronism with a corresponding one of said horizontal synchronizing signals, for generating a timing pulse at a specific time point within each of respective front porch portions of a corresponding one of said input chrominance signal and said playback chrominance signal, in respective blanking intervals of said chrominance signal; and
phase shift processing circuit means for generating the corresponding one of said first and second frequency conversion signals and for executing a 90° phase shift of said generated frequency conversion signal in response to each of said timing pulses.

2. A magnetic recording apparatus according to claim 1,in which said phase shift processing means comprises a phase lock loop circuit for producing said frequency conversion signal as an output signal which is phase locked with said horizontal synchronizing signal, and in which said timing signal generating means comprises a counter circuit for counting a signal generated by said phase lock loop circuit having a higher frequency than a frequency of said horizontal synchronizing signal, operation of said counter being synchronized with said horizontal synchronizing signal.

3. A magnetic recording apparatus according to claim 1, in which said timing signal generating means comprises a timer circuit responsive to said horizontal synchronizing signal for generating timing pulses following a fixed delay time after respective pulses of said horizontal synchronizing signal.

## Patentansprüche

1. Magnetaufzeichnungsvorrichtung zum Aufzeichnen eines Eingangsluminanzsignals und eines Eingangschrominanzsignals eines Eingangsvideosignals auf ein Magnetaufzeichnungsmedium, umfassend ein Mittel zum Aufzeichnen eines Eingangsvideosignals mit einem Mittel zum Frequenzmodulieren eines Eingangsluminanzsignals, um ein FM-Luminanzsignal zu erhalten, einem Mittel zum Erzeugen eines ersten Frequenzumsetzungssignals, einem ersten Mischerschaltungsmittel, das auf das Eingangschrominanzsignal und das erste Frequenzumsetzungssignal anspricht, um ein in bezug auf die Frequenz abwärts umgesetztes Chrominanzsignal zu erzeugen, wobei das Mittel zum Erzeugen eines ersten Frequenzumsetzungssignals bewirkt, daß das erste Frequenzumsetzungssignal einmal in jedem horizontalen Abtastintervall eines Halbbildintervalls des Chrominanzsignals mit einer festen Richtung einer Phasenverschiebung um 90° phasenverschoben wird, und einem Mittel zum Aufzeichnen des in bezug auf die Frequenz abwärts umgesetzten Chrominanzsignals und des FM-Luminanzsignals als ein frequenzmultiplextes Videosignal auf ein magnetisches Medium, und außerdem umfassend ein Mittel zur Wiedergabe des magnetischen Mediums, um ein Wiedergabesignal zu erhalten, und zum Trennen des FM-Luminanzsignals und des in bezug auf die Frequenz abwärts umgesetzten Chrominanzsignals von dem Wiedergabesignal und zum Demodulieren des FM-Luminanzsignals, um ein Wiedergabeluminanzsignal zu erhalten, ein Mittel zum Erzeugen eines zweiten Frequenzumsetzungssignals, wobei das Mittel zum Erzeugen eines zweiten Frequenzumsetzungssignals bewirkt, daß das zweite Frequenzumsetzungssignal einmal in jedem horizontalen Abtastintervall eines Halbbildintervalls des Wiedergabesignals in einer Richtung entgegengesetzt zu derjenigen der Phasenverschiebung des ersten Frequenzumsetzungssignals um 90° phasenverschoben wird, und ein zweites Mischermittel, das auf das in bezug auf die Frequenz abwärts umgesetzte Chrominanzsignal und das zweite Frequenzumsetzungssignal anspricht, um ein Wiedergabechrominanzsignal zu erzeugen, wobei das Mittel zum Erzeugen eines ersten Frequenzumsetzungssignals ein Mittel zum Trennen eines Horizontalsynchronsignals von dem Eingangsluminanzsignal umfaßt, und das Mittel zum Erzeugen eines zweiten Frequenzumsetzungssignals ein Mittel zum Trennen eines Horizontalsynchronsignals von dem Wiedergabeluminanzsignal umfaßt,
dadurch gekennzeichnet, daß
jedes der Mittel zum Erzeugen eines ersten und eines zweiten Frequenzumsetzungssignals umfaßt:
ein Mittel zum Erzeugen eines Zeitgebungssignals, das synchron mit einem entsprechenden Signal der Horizontalsynchronsignale arbeitet, um einen Zeitgebungsimpuls zu einem spezifischen Zeitpunkt innerhalb jedes Abschnitts von jeweiligen vorderen Schwarzschulterabschnitten eines entsprechenden Signals des Eingangschrominanzsignals und des Wiedergabechrominanzsignals in jeweiligen Austastlücken des Chrominanzsignals zu erzeugen, und
ein Schaltungsmittel zum Verarbeiten einer Phasenverschiebung zum Erzeugen des entsprechenden Signals der ersten und zweiten Frequenzumsetzungssignale und zum Ausführen einer 90°-Phasenverschiebung des erzeugten Frequenzumsetzungssignals in Ansprechen auf jeden der Zeitgebungsimpulse.

2. Magnetaufzeichnungsvorrichtung nach Anspruch 1, wobei das Mittel zum Verarbeiten einer Phasenverschiebung einen Phasenregelkreis umfaßt, um das Frequenzumsetzungssignal als ein Ausgangssignal zu erzeugen, dessen Phase mit dem Horizontalsynchronsignal verrastet ist, und wobei das Mittel zum Erzeugen eines Zeitgebungssignals eine Zählerschaltung umfaßt, um ein von dem Phasenregelkreis erzeugtes Signal mit einer höheren Frequenz als eine Frequenz des Horizontalsynchronsignals zu zählen, wobei der Betrieb des Zählers mit dem Horizontalsynchronsignal synchronisiert ist.

3. Magnetaufzeichnungsvorrichtung nach Anspruch 1, wobei das Mittel zum Erzeugen eines Zeitgebungssignals eine Zeitgliedschaltung umfaßt, die auf das Horizontalsynchronsignal anspricht, um im Anschluß an eine feste Verzögerungszeit nach jeweiligen Impulsen des Horizontalsynchronsignals Zeitgebungsimpulse zu erzeugen.

## Revendications

1. Appareil d'enregistrement magnétique pour enregistrer sur un support d'enregistrement magnétique un signal de luminance d'entrée et un signal de chrominance d'entrée d'un signal vidéo d'entrée, comportant un moyen servant à enregistrer ledit signal vidéo d'entrée comprenant un moyen pour moduler en fréquence ledit signal de luminance d'entrée pour obtenir un signal de luminance modulé en fréquence (FM), un moyen pour générer un premier signal de conversion de fréquence, un premier moyen formant circuit mélangeur réagissant audit signal de chrominance d'entrée et audit premier signal de conversion de fréquence pour produire un signal de chrominance abaissé en fréquence par conversion, ledit moyen de génération de premier signal de conversion de fréquence fonctionnant de manière à déphaser de 90° ledit premier signal de conversion de fréquence une fois au cours de chaque intervalle de balayage horizontal d'un intervalle de trame dudit signal de chrominance avec une direction fixe de déphasage, et un moyen pour enregistrer sur un support magnétique, sous la forme d'un signal vidéo multiplexé en fréquence, ledit signal de chrominance abaissé en fréquence par conversion et ledit signal de luminance FM, et comprenant en outre un moyen pour la lecture dudit support magnétique pour obtenir un signal de restitution et pour séparer ledit signal de luminance FM et ledit signal de chrominance abaissé en fréquence dudit signal de restitution et pour démoduler ledit signal de luminance FM pour obtenir un signal de luminance restitué, un moyen pour générer un second signal de conversion de fréquence, ledit moyen de génération de second signal de conversion de fréquence fonctionnant de manière à déphaser de 90° ledit signal de conversion de fréquence une fois au cours de chaque intervalle de balayage horizontal d'un intervalle de trame dudit signal de restitution dans une direction opposée à celle dudit déphasage de premier signal de conversion de fréquence, et un second moyen mélangeur réagissant audit signal de chrominance abaissé en fréquence par conversion et audit second signal de conversion de fréquence pour produire un signal de chrominance de restitution, ledit moyen de génération de premier signal de conversion de fréquence comprenant un moyen pour séparer un signal de synchronisation horizontale dudit signal de luminance d'entrée et ledit moyen de génération de second signal de conversion de fréquence comprenant un moyen pour séparer un signal de synchronisation horizontale dudit signal de luminance de restitution,
caractérisé en ce que chacun desdits moyens de génération de premier et second signaux de conversion de fréquence comprend :
un moyen de génération de signal de base de temps fonctionnant en synchronisme avec un signal de synchronisation horizontale correspondant, pour générer une impulsion de base de temps à un instant particulier à l'intérieur de chacune des parties de palier avant respectives d'un signal correspondant parmi ledit signal de chrominance d'entrée et ledit signal de chrominance de restitution, dans des intervalles de suppression respectifs dudit signal de chrominance; et
un moyen formant circuit de traitement de déphasage pour générer le signal correspondant parmi lesdits premier et second signaux de conversion de fréquence et pour exécuter, en réponse à chacune desdites impulsions de base de temps, un déphasage de 90° dudit signal de conversion de fréquence généré.

2. Appareil d'enregistrement magnétique selon la revendication 1, dans lequel ledit moyen de traitement de déphasage comprend un circuit formant boucle à asservissement de phase pour produire ledit signal de conversion de fréquence sous forme d'un signal de sortie qui est asservi en phase audit signal de synchronisation horizontale, et dans lequel ledit moyen de génération de signal de base de temps comprend un circuit de comptage pour compter un signal généré par ledit circuit formant boucle à asservissement de phase et dont la fréquence est supérieure à la fréquence dudit signal de synchronisation horizontale, le fonctionnement dudit compteur étant synchronisé avec ledit signal de synchronisation horizontale.

3. Appareil d'enregistrement magnétique selon la revendication 1, dans lequel ledit moyen de génération de signal de base de temps comprend un circuit de base de temps réagissant audit signal de synchronisation horizontale pour générer des impulsions de base de temps à la suite d'un temps de retard fixe après les impulsions respectives dudit signal de synchronisation horizontale.
